(19) Europäisches Patentamt
European Patent Office
Office européen des brevets

(11) **EP 1 819 947 B1**

(12) **EUROPÄISCHE PATENTSCHRIFT**

(45) Veröffentlichungstag und Bekanntmachung des Hinweises auf die Patenterteilung:
**02.03.2011 Patentblatt 2011/09**

(21) Anmeldenummer: **05797243.2**

(22) Anmeldetag: **04.10.2005**

(51) Int Cl.:
*F16H 45/02* (2006.01)     *F16H 47/06* (2006.01)

(86) Internationale Anmeldenummer:
**PCT/EP2005/010658**

(87) Internationale Veröffentlichungsnummer:
**WO 2006/061055 (15.06.2006 Gazette 2006/24)**

(54) **GETRIEBEBAUEINHEIT**

TRANSMISSION ASSEMBLY

ENSEMBLE TRANSMISSION

(84) Benannte Vertragsstaaten:
**DE**

(30) Priorität: **11.12.2004 DE 102004059744**

(43) Veröffentlichungstag der Anmeldung:
**22.08.2007 Patentblatt 2007/34**

(73) Patentinhaber: **Voith Turbo GmbH & Co. KG
89522 Heidenheim (DE)**

(72) Erfinder:
• **KOCH, Werner
73326 Deggingen (DE)**

• **KLEMENT, Werner
89520 Heidenheim (DE)**
• **BECKE, Martin
89075 Ulm (DE)**

(74) Vertreter: **Dr. Weitzel & Partner
Patentanwälte
Friedenstrasse 10
89522 Heidenheim (DE)**

(56) Entgegenhaltungen:
**DE-A1- 10 045 337     DE-A1-102004 008 678
DE-C- 949 990**

EP 1 819 947 B1

**Beschreibung**

Die Erfindung betrifft eine Getriebebaueinheit, im Einzelnen mit den Merkmalen aus dem Oberbegriff des Anspruchs 1.

Getriebebaueinheiten, insbesondere Automatgetriebe, sind aus dem Stand der Technik in einer Vielzahl unterschiedlichster Ausführungen bekannt. Diese umfassen im einfachsten Fall ein Anfahrelement, eine diesem zugeordnete Überbrückungskupplung sowie eine dem Anfahrelement und der Überbrückungskupplung nachgeordnete Drehzahl-/Drehmomentwandlungseinheit, die durch wenigstens eine Gangstufe charakterisiert ist. Diesbezüglich wird beispielsweise auf nachfolgende Druckschriften verwiesen.

> DE 100 45 337 A1
> FR 2 719 355
> DE 949 990
> DE 972 489
> US 3,442,155
> DE 960 520
> DE 10 2004 008 678 A1

Aus der Druckschrift DE 949 990 ist ein Getriebe für Kraftfahrzeuge mit einem Strömungsgetriebe vorbekannt, das mit einem mehrgängigen Stirnräderwechselgetriebe mit einem Hauptwellenzug und einem dazu parallelen Nebenwellenzug gekoppelt ist, wobei das Primärrad des Strömungsgetriebes mit dem Antriebsritzel eines dem Wechselgetriebe vorgeschalteten Zahnrädervorgeleges und das Turbinenrad mit dem Antriebsritzel eines weiteren dem Wechselgetriebe vorgeschalteten Zahnrädervorgeleges verbunden ist, wobei sich die Übersetzung des durch das Pumpenrad antreibbaren Vorgeleges von der Übersetzung des durch das Turbinenrad antreibbaren Vorgeleges unterscheidet. Das Turbinenrad ist dabei über einen Freilauf mit dem mit diesem gekoppelten Vorgelege verbunden. Die Leistungsübertragung über die einzelnen Vorgelege erfolgt dann über ein weiteres Vorgelege auf den Getriebeausgang, welcher koaxial zur Getriebeeingangswelle angeordnet ist. Der hydrodynamische Drehzahl-/Drehmomentwandler befindet sich dabei auch mit Freilauf immer im Kraftfluss, was sich jedoch gerade im Hinblick auf den Hauptarbeitsbereich einer derartigen Getriebebaueinheit als negativ hinsichtlich des Wirkungsgrades auswirkt. Ferner ist keine Schubmomentübertragungsmöglichkeit aufgrund des zwischengeschalteten Freilaufes zur Antriebsmaschine gegeben. Der bei dieser Ausführung gewählte Unterschied in der Stirnradübersetzung beider Vorgelege entspricht dabei dem Schlupf im Wandler bei Volllast und höchster Drehzahl. Die Auslegung der Vorgelege erfolgt dabei im Hinblick auf eine feste Wandlerkennlinie. Für das Zusammenspiel mit einer Antriebsmaschine bedeutet dies, dass für jeden Motor spezielle Stirnradübersetzungen der einzelnen Vorgelege gewählt werden müssen. Ein weiterer wesentlicher Nachteil der in dieser Druckschrift beschriebenen Ausführung besteht darin, dass keine Retarderfunktion realisierbar ist und für diese ein separates Bauelement erforderlich ist.

Der Erfindung liegt daher die Aufgabe zugrunde, eine Getriebebaueinheit der eingangs genannten Art derart weiterzuentwickeln, dass die genannten Nachteile vermieden werden. Der konstruktive Aufwand soll möglichst gering gehalten werden. Gleiches gilt für den steuerungstechnischen Aufwand. Die erfindungsgemäße Getriebebaueinheit soll ferner für eine Vielzahl unterschiedlicher Antriebsmaschinen verwendbar sein.

Die erfindungsgemäße Lösung ist durch die Merkmale des Anspruchs 1 charakterisiert. Vorteilhafte Ausgestaltungen sind in den Unteransprüchen beschrieben.

Die Getriebebaueinheit umfasst einen Getriebeeingang und mindestens einen Getriebeausgang. Zwischen diesen ist ein Anfahrelement in Form einer hydrodynamischen Kupplung, umfassend ein Primärrad und ein Sekundärrad, die miteinander einen mit Betriebsmittel befüllbaren Arbeitsraum bilden, vorgesehen. Die hydrodynamische Kupplung ist zumindest steuerbar, d. h. befüll- und entleerbar. Die hydrodynamische Kupplung kann dabei mit Teil- als auch Vollfüllung betrieben werden. Vorzugsweise ist der Füllungsgrad frei einstellbar. Ferner ist dem Anfahrelement eine Einrichtung zur Überbrückung zugeordnet. Die Getriebebaueinheit umfasst des weiteren ein mechanisches Wechselgetriebe, welches über das Anfahrelement oder die Einrichtung zur Überbrückung des Anfahrelementes mit dem Getriebeeingang verbindbar ist und dessen Ausgang mit dem Getriebeausgang verbunden ist oder diesen bildet. Das Wechselgetriebe umfasst mindestens eine eine Gangstufe bildende Drehzahl-/Drehmomentwandlungseinrichtung. Erfindungsgemäß ist die Einrichtung zur Überbrückung des Anfahrelementes als Überbrückungsschaltung ausgeführt. Diese umfasst zwei Drehzahl-/Drehmomentwandlungseinrichtungen, eine erste Drehzahl-/Drehmomentwandlungseinrichtung und eine zweite Drehzahl-/Drehmomentwandlungseinrichtung, über welche der Getriebeeingang unter Bildung eines ersten und/oder zweiten Leistungszweiges mit dem Wechselgetriebe verbindbar ist. Zur Gewährleistung der Leistungsübertragung über den ersten oder zweiten Leistungszweig sind Mittel zur wahlweisen Gewährleistung oder Unterbrechung der Leistungsübertragung über die erste oder zweite Drehzahl-/Drehmomentwandlungseinrichtung zum Wechselgetriebe vorgesehen. Diese umfassen erfindungsgemäß eine der zweiten Drehzahl-/Drehmomentwandlungseinrichtung zugeordnete Schalteinrichtung, die an beliebiger Stelle in der Verbindung zwischen dem Primärrad und dem Eingang des Wechselgetriebes angeordnet sein kann. Dabei kann die Schalteinrichtung direkt der Verbindung des Einganges der zweiten Drehzahl-/Drehmomentwandlungseintung mit dem Primärrad bzw. dem mit diesem drehfest gekoppelten Element, der Verbindung des Ausganges der zweiten Drehzahl-/Drehmomentwandlungseinrichtung mit dem Eingang des Wechselgetriebes oder aber einem beliebigen Übertragungselement in der Drehzahl-/Drehmomentwandlungseinrichtung zugeordnet werden. Die der ersten Drehzahl-/Drehmomentwandlungseinrichtung zur Verbindung zwischen dem Sekundärrad und dem Wechselgetriebe zugeordnete Schalteinrichtung wird erfindungsgemäß von einem Freilauf, d. h. einer drehrichtungsgeschalteten Kupplung gebildet. Aufgrund der einem Freilauf inhärenten Eigenschaften wird dieser erst bei Drehzahlgleichheit wirksam, während er im anderen Fall als Überholkupplung fungiert. Dabei werden im wesentlichen die zwei folgenden Funktionszustände unterschieden:

1. Ist die Drehzahl auf der mit dem Sekundärrad gekoppelten Seite des Freilaufs gleich der mit dem Eingang des Wechselgetriebes gekoppelten Seite bzw. Element des Freilaufes, d. h. Relativgeschwindigkeit der beiden Elemente des Freilaufs = 0, wird ein Moment zum Wechselgetriebe oder von diesem übertragen bzw. umgekehrt.

Bei Leistungsflussrichtung vom Getriebeeingang zum Getriebeausgang wird die mit dem Sekundärrad gekoppelte Seite des Freilaufes auch als antriebsseitiges Element bezeichnet, während das mit dem Eingang des Wechselgetriebes verbundene Element als abtriebseitiges Element bezeichnet wird.

2. Ist die Drehzahl des mit dem Sekundärrad gekoppelten Elementes des Freilaufes geringer als das mit dem Eingang des Wechselgetriebes gekoppelte, d.h. dem abtriebsseitigen Element, wird über das Sekundärrad bzw. den mit diesem gekoppelten Freilauf kein Moment zum Wechselgetriebe oder in der anderen Richtung übertragen und das Sekundärrad läuft frei.

Die erfindungsgemäße Lösung bietet den Vorteil, dass zum einen eine automatische Umschaltung von hydrodynamischer Leistungsübertragung zur mechanischen Leistungsübertragung zwischen Getriebeeingang und Wechselgetriebe erfolgen kann, ohne dass hierzu ein Schaltelement angesteuert werden muss. Dies ist insbesondere dann wichtig, wenn ohne Zugkraftunterbrechung geschaltet werden soll. Ferner bietet diese Lösung neben der Realisierung eines nahezu verschleißfreien Anfahrvorganges den Vorteil, dass während eines Schaltvorganges im Wechselgetriebe die hydrodynamische Kupplung nicht zwingend entleert werden muss und auch keine zusätzliche Trennkupplung zur Leistungsunterbrechung erforderlich ist. Zur Vermeidung einer für den Wirkungsgrad $\eta$ nachteiligen Aufteilung der Leistung auf beide Leistungszweige wird jedoch die hydrodynamische Kupplung vorzugsweise entleert. Die Abkopplung der Getriebeeingangswelle von den Schaltstufen des Wechselgetriebes erfolgt dann allein über den Freilauf und sichert somit die Funktion der Synchroneinrichtung im Schaltgetriebe. Zur Realisierung der Funktion der automatischen Schaltbarkeit ist es jedoch erforderlich, dass die erste und die zweite Drehzahl-/Drehmomentwandlungseinrichtung zumindest auf den der hydrodynamischen Kupplung inhärenten Schlupf ausgelegt sind, d. h., die erste und die zweite Drehzahl-/Drehmomentwandlungseinrichtung sind durch unterschiedliche Übersetzungen zum Wechselgetriebe charakterisiert.

Die erfindungsgemäße Lösung ist dabei dadurch charakterisiert, dass die Funktion der Überbrückungskupplung nunmehr durch eine Überbrückungsschaltung übernommen wird, wobei diese hinsichtlich der Positionierung im Getriebe frei anordenbar ist. Insbesondere kann die Überbrückungsfunktion auch in das Getriebe selbst verlagert werden, wenn die hydrodynamische Komponente als separate Baueinheit ausgeführt ist. Ferner ist bei gewünschter rein mechanischer Leistungsübertragung eine Umgehung der hydrodynamischen Komponente möglich, die frei von einer drehfesten Kopplung zwischen dem Primärrad und dem Sekundärrad ist. Das Sekundärrad kann in diesem Fall frei mitlaufen und ist frei von einer Abstützung gegenüber einem rotierenden oder ortsfesten Element. Die Befüllung der hydrodynamischen Komponente kann dann ohne wesentliche Nachteile beibehalten werden. Die Überbrückung, d. h. die Umgehung des hydrodynamischen Leistungszweiges, erfolgt dabei durch Änderung bzw. Wechsel des Leistungsflusses zwischen den beiden Leistungswegen über die erste oder zweite Drehzahl-/Drehmomentwandlungseinrichtung der Überbrückungsschaltung.

Die erfindungsgemäße Lösung bietet ferner den Vorteil, dass aufgrund der Ausführung der hydrodynamischen Komponente als hydrodynamische Kupplung und deren Steuerbarkeit diese Anfahreinheit mit einer Vielzahl unterschiedlich ausgelegter Antriebsmaschinen zusammenarbeiten kann und eine Überbrückung immer bei gleichem Drehzahlverhältnis von Sekundärrad zu Primärrad erfolgt. Gemäß einer besonders vorteilhaften Ausgestaltung erfolgt zur Realisierung der Drehzahlgleichheit bei gewünschter Überbrückung zwischen den Ausgängen der einzelnen Drehzahl-/Drehmomentwandlungseinrichtungen der Überbrückungsschaltung die Auslegung dieser auf einen bestimmten vordefinierten Schlupfzustand, bei welchem eine Überbrückung gewünscht wird. Dazu wird die Dimensionierung der einzelnen Drehzahl-/Drehmomentwandlungseinrichtungen abgestimmt. Dazu wird ein bestimmter vordefinierter Schlupfwert an der hydrodynamischen Komponente zugrundegelegt, der frei gewählt sein kann oder aber durch die Leistungsmerkmale der hydrodynamischen Komponente charakterisiert ist und der ein bestimmtes vordefinierte Drehzahlverhältnis zwischen Sekundärrad und Primärrad beschreibt. Dieses Drehzahlverhältnis wird bei der Auslegung der beiden Drehzahl-/Drehmomentwandlungseinrichtungen berücksichtigt, so dass dieses an den Ausgängen, insbesondere den mit den parallel bzw. exzentrisch zur hydrodynamischen Komponente angeordneten Vorgelegewelle koppelbaren Zahnrädern zu berücksichtigen ist. Die Dimensionierung der einzelnen miteinander kämmenden Stirnräder hinsichtlich ihrer Abmessungen sowie Zähnezahl und/oder Zahnform und Auslegung ergibt sich dabei als Funktion des Drehzahlverhältnisses $\frac{n_T}{n_P}$ zwischen Sekundärrad und Primärrad. Dadurch ist es möglich bei Leistungsübertragung über den ersten Leistungszweig, d. h. rein hydrodynamischer Leistungsübertragung zwischen Getriebeeingang und Eingang des Wechselgetriebes bei Einstellung des bestimmten Schlupfwertes an der hydrodynamischen Komponente, insbesondere der hydrodynamischen Kupplung, ohne zusätzliche Maßnahmen die Überbrückung bei Vorliegen dieses Drehzahlverhältnisses vorzunehmen, indem die schaltbare Kupplung in eine Schaltstellung verbracht wird, die nunmehr die zweite mit dem Primärrad gekoppelte Drehzahl-/Drehmomentwandlungseinrichtung mit der Vorgelegewelle verbindet und damit einen Durchtrieb zwischen dem mit dem Primärrad gekoppelten Eingang der Überbrückungsschaltung bzw. dem Primärrad und damit der mit dieser gekoppelten Antriebsmaschine und dem Ausgang der Überbrückungsschaltung über die Drehzahl-/Drehmomentwandlungseinrichtung zumindest teilweise parallel zur Rotationsachse der hydrodynamischen Komponente ermöglicht. Dimensionierung, insbesondere Auslegung der einzelnen Stirnräder hinsichtlich Zähnezahl, Durchmesser und/oder den den Eingriff bestimmenden Parametern ist als Funktion der Drehzahldifferenz, bei welcher eine Überbrückung erfolgen soll, definiert.

Die so modifizierte erfindungsgemäße Lösung ermöglicht es, dass zum einen die Überbrückung automatisch bei Einstellung eines bestimmten Schlupfes, d. h. Drehzahlverhältnisses in der hydrodynamischen Kupplung erfolgt und ferner somit aufgrund der nicht konstanten Kennlinie eine Zusammenarbeit mit einer Vielzahl unterschiedlicher Antriebsmaschinen möglich ist. Nach erfolgter Überbrückung wird gemäß einer besonders bevorzugten Betriebsweise die hydrodynamische Kupplung entleert. Bei befüllter hydrodynamischer Kupplung kann gemäß einer weiteren Möglichkeit immer noch ein Teil der Leistung hydrodynamisch übertragen werden, wobei in diesem Fall bei Steuerbarkeit der hydrodynamischen Komponente eine Beeinflussung dieses Leistungsanteiles gegeben ist.

Gemäß einer besonders vorteilhaften Ausgestaltung ist ferner dem Sekundärrad eine Bremseinrichtung zugeordnet. Diese kann vielgestaltig ausgeführt sein. Sie dient der Festsetzung des Sekundärrades, wobei bei mechanischer Leistungsübertragung die hydrodynamische Kupplung bei Befüllung als hydrodynamischer Retarder fungiert, indem sich der Getriebeausgang über die mechanische Übersetzung, insbesondere die zweite Drehzahl-/Drehmomentwandlungseinrichtung der Überbrückungsschaltung am als Stator fungierenden Sekundärrad abstützt. Die Kombination aus Bremseinrichtung und Freilauf bietet zusätzlich den Vorteil eines sogenannten Hillholders, d. h. einer Berghaltefunktion für ein Fahrzeug bzw. verhindert das automatische Rückrollen. Die Anordnung der Bremseinrichtung muss dabei nicht zwingend am Sekundärrad erfolgen. Entscheidend ist die Anordnung, d. h. Anbindung an einen Bereich zwischen Sekundärrad und Freilauf, d. h. im Leistungsfluss vom Sekundärrad zum Getriebe betrachtet vor der Schalteinrichtung. Bezüglich der verwendeten Bremseinrichtungen gibt es keinerlei Beschränkungen. Dabei sind neben mechanischen, hydraulischen, auch elektrische Bremseinrichtungen denkbar.

Bezüglich der Ausgestaltung des Freilaufes und der Schaltelemente und deren Anordnung bestehen eine Mehrzahl von Möglichkeiten. Dies gilt sowohl für die der Überbrückungsschaltung, insbesondere der zweiten Drehzahl-/Drehmomentwandlungseinrichtung zugeordneten Schalteinrichtungen sowie der den die Gangstufen beschreibenden Drehzahl-/Drehmomentwandlungseinrichtungen des Wechselgetriebes. Die Schalteinrichtungen können dabei koaxial zum Getriebeeingang angeordnet sein. Dies bedeutet für die zweite Drehzahl-/Drehmomentwandlungseinrichtung eine Zuordnung zum Eingang der zweiten Drehzahl-/Drehmomentwandlungseinrichtung. Eine andere Möglichkeit besteht darin, die Schalteinrichtungen der Vorgelegewelle zuzuordnen. In diesem Fall ist die Schalteinrichtung der zweiten Drehzahl-/Drehmomentwandlungseinrichtung in der Verbindung zwischen dem Ausgang der zweiten Drehzahl-/Drehmomentwandlungseinrichtung und der Vorgelegewelle angeordnet. Dies gilt in Analogie auch für den der ersten Drehzahl-/Drehmomentwandlungseinrichtung zugeordneten Freilauf. In Analogie können diese Aussagen auch auf die den einzelnen Gangstufen bildenden Drehzahl-/Drehmomentwandlungseinrichtungen zugeordneten Schaltelemente übertragen werden, wobei hier eine Anordnung entweder auf den Vorgelegewellen, d. h. jeweils am oder an den Eingängen der die Gangstufen bildenden Drehzahl-/Drehmomentwandlungseinrichtungen und der Vorgelegewelle erfolgen kann. Die andere Möglichkeit besteht darin, die Schalteinrichtungen vorzugsweise in der Verbindung zwischen den Ausgängen der einzelnen Gangstufen bildenden Drehzahl-/Drehmomentwandlungseinrichtungen mit dem Ausgang des Wechselgetriebes, welcher vorzugsweise mit dem Ausgang der Getriebeeinheit zusammenfällt, anzuordnen. Dabei können einzelne Schalteinrichtungen Verwendung finden, welche vorzugsweise in Form von Kupplungseinrichtungen vorliegen. Es werden jedoch vorzugsweise Ausführungen angestrebt, bei denen eine Schalteinrichtung mehreren Gangstufen bildenden Drehzahl-/Drehmomentwandlungseinrichtungen und/oder zusätzlich einer Drehzahl-/Drehmomentwandlungseinrichtung der Überbrückurigsschaltung zugeordnet sind. In diesem Fall weisen die einzelnen Schalteinrichtungen in der Regel mehrere Kupplungsebenen auf, die hinsichtlich ihrer Betätigung aufgrund der konstruktiven Ausführungen einer Zwangskopplung unterliegen, wodurch der steuerungstechnische Aufwand zum Teil wiederum minimiert werden kann, da eine automatische Betätigung einer der beiden Kupplungsebenen zwangsläufig die Betätigung der anderen nach sich zieht.

Die einzelnen Kupptungseinrichtungen können beliebig ausgeführt sein. Vorzugsweise werden jedoch zur Realisierung einer verschleißfreien Kraftübertragung formschlüssige synchron schaltbare Kupplungen verwendet. Diese sind vorzugsweise in Form von Klauenkupplungen ausgeführt, wobei es bezüglich der konkreten konstruktiven Ausgestaltung keinerlei Beschränkungen gibt.

Um die Spreizung noch weiter zu erhöhen, können erfindungsgemäß die Übersetzungen der Drehzahl-/Drehmomentwandlungseinrichtungen der Überbrückungsschaltung und/oder wenigstens eine, eine Gangstufe des Wechselgetriebes bildende Drehzahl-/Drehmomentwandlungseinrichtung mehrmals genutzt werden. Dazu sind grundsätzlich nachfolgend genannte drei Lösungsansätze denkbar, die auch hinsichtlich ihrer Funktion und Wirkungsweise miteinander kombiniert werden können. Die konkrete konstruktive Umsetzung erfolgt dann entsprechend des Einzelfalles.

1. Verwendung wenigstens einer der beiden Drehzahl-/Drehmomentwandlungseinrichtungen, insbesondere Stirnradpaare der Einrichtung zur Überbrückung als Vorgelegeübersetzung für das Wechselgetriebe im jeweils anderen Leistungszweig.

2. Verwendung einer der Drehzahl-/Drehmomentwandlungseinrichtungen der Einrichtung zur Überbrückung - die dem ersten Zweig und/oder dem zweiten Leistungszweig zugeordnete - als Gangstufenübersetzung des Wechselgetriebes.

3. Verwendung einer eine Gangstufe beschreibenden Drehzahl-/Drehmomentwandlungseinrichtung des Wechselgetriebes als Vorgelegeübersetzung für das Wechselgetriebe, d. h. als erste oder zweite Drehzahl/Drehmomentwandlungseinrichtung der Überbrückungsschaltung. All die genannten Möglichkeiten unterscheiden sich hinsichtlich der Art der Anbindung der einzelnen Drehzahl-/Drehmomentwandlungseinrichtungen an den Getriebeeingang bzw. den Ein- und Ausgang des Wechselgetriebes.

Der erste Lösungsansatz ist dadurch charakterisiert, dass wenigstens eine der Drehzahl-/Drehmomentwandlungseinrichtungen der Überbrückungsschaltung auch für den jeweils anderen Leistungszweig zusätzlich optional zum Einsatz gelangen kann. Dies bedeutet konkret, dass entweder die erste Drehzahl-/Drehmomentwandlungseinrichtung, welche primär der Kopplung zwischen dem Sekundärrad und dem Eingang des Wechselgetriebes dient, wahlweise zusätzlich mit dem mit dem Getriebeeingang gekoppeltem Anschlusselement des anderen zweiten Leistungszweiges, insbesondere des Primärrades bzw. der Verbindung des Primärrades mit dem Getriebeeingang, verbindbar ist und diesen mit dem Wechselgetriebe koppelt. Dies ist in Analogie auch für die zweite Drehzahl-/Drehmomentwandlungseinrichtung denkbar. Diese ist dann optional zusätzlich mit dem Getriebeeingang gekoppelten Anschlusselement in Form des Sekundärrades der hydrodynamischen Komponente verbindbar. Dies setzt jedoch voraus, dass der Freilauf abgekoppelt werden kann. Dies bedeutet, dass insbesondere bei unterschiedlicher Übersetzung zwischen den beiden Drehzahl-/Drehmomentwandlungseinrichtungen der Überbrückungsschaltung, welche vorzugsweise immer gewählt wird, um eine Überbrückung bei einem bestimmten Schlupf zu gewährleisten, die einzelnen Gangstufen zusätzlich mit einer weiteren Übersetzung in wenigstens einem der Leistungszweige gefahren werden kann. Im erstgenannten Fall bedeutet dies, dass je nach Ausführung des Wechselgetriebes alle mit der ersten Drehzahl-/Drehmomentwandlungseinrichtung der

Überbrückungsschaltung gekoppelten Gangstufen einmal hydrodynamisch und einmal mechanisch mit der Übersetzung der ersten Drehzahl-/Drehmomentwandlungseinrichtung und die mit der zweiten Drehzahl-IDrehmomentwandlungseinrichtung gekoppelten Gangstufen mechanisch, durchlaufen werden können. Im zweiten Fall bedeutet dies, dass alle mit dem ersten Leistungszweig gekoppelten Gangstufen hydrodynamisch und die mit der zweiten Drehzahl-/Drehmomentwandlungseinrichtung koppelbaren Gangstufen zweimal mechanisch mit den unterschiedlichen Vorgelegeübersetzungen der ersten und zweiten Drehzahl-/Drehmomentwandlungseinrichtung durchlaufen können. Werden beide Möglichkeiten miteinander kombiniert, sind alle Gangstufen sowohl zweimal hydrodynamisch als auch zweimal mechanisch durchlaufbar. Des weiteren ist es denkbar, beispielsweise eine der Gangstufen bildenden Drehzahl-/Drehmomentwandlungseinrichtungen zusätzlich als eine mögliche Vorgelegeübersetzung im mechanischen Leistungszweig zu nutzen, d. h. die Gangstufenübersetzung einer Gangstufe ist vom Ausgang der Getriebebaueinheit entkoppelbar und mit dem Primärrad, d. h. mit dem Eingang der Getriebebaueinheit drehfest verbindbar, wobei der Leistungsfluss dann vom Getriebeeingang zur Vorgelegewelle geleitet wird.

Vorzugsweise sind die beiden Drehzahl-/Drehmomentwandlungseinrichtungen in Vorgelegebauweise ausgeführt, d. h. im einfachsten Fall als Stirnradsätze. Das Wechselgetriebe und die die Gangstufen realisierenden Drehzahl-/Drehmomentwandlungseinrichtungen können beliebig ausgestaltet sein, vorzugsweise sind diese jedoch ebenfalls in Vorgelegebauweise ausgeführt. Der mindestens eine Eingang des Wechselgetriebes wird dabei von einer parallel zur Rotationsachse der hydrodynamischen Komponente angeordneten Vorgelegewelle gebildet, die mit den Ausgängen der einzelnen Drehzahl-/Drehmomentwandlungseinrichtungen der Funktionsschaltung verbindbar, vorzugsweise verbunden ist. Jede der beiden Drehzahl-/Drehmomentwandlungseinrichtungen, insbesondere die beiden Vorgelege sind dabei primär einem Leistungszweig zugeordnet, die erste Drehzahl-/Drehmomentwandlungseinrichtung dem hydrodynamischen Leistungszweig, d. h. der Verbindung zwischen dem Sekundärrad der hydrodynamischen Komponente und dem Eingang des Wechselgetriebes, die zweite Drehzahl-/Drehmomentwandlungseinrichtung mit dem Primärrad bzw. der Verbindung des Primärrades mit dem Getriebeeingang und dem Eingang des Wechselgetriebes. Beide Vorgelege sind hinsichtlich ihrer Übersetzung unterschiedlich ausgelegt. Die Auslegung erfolgt dabei zur Realisierung der Drehzahlgleichheit zwischen den mit der Vorgelegewelle gekoppelten Elementen der Drehzahl-/Drehmomentwandlungseinrichtungen bei gewünschter Überbrückung durch Berücksichtigung des Schlupfes.

Die Ankopplung der einzelnen Drehzahl-/Drehmomentwandlungseinrichtungen, ausgenommen der über den Freilauf koppelbaren ersten Drehzahl-/Drehmomentwandlungseinrichtung der Überbrückungsschaltung erfolgt in der Regel über Schaltelemente, wobei hier auch Schaltelemente, deren Betätigung eine Zwangskopplung erfordert, zu einer baulichen Einheit zusammengefasst werden können, so dass die Zwangskopplung hinsichtlich der Betätigung bereits durch die bauliche Ausführung gegeben wäre und damit der steuerungstechnische Aufwand verringert werden kann. Die Anordnung der Schaltelemente selbst kann dabei

a) koaxial zur Rotationsachse des Anfahrelementes oder

b) exzentrisch zur Rotationsachse des Anfahrelementes

erfolgen. Diese Anordnungsmöglichkeiten gelten auch für die Anordnung von Freilauf und Schaltelement der Überbrückungsschaltung. Die Anordnungsmöglichkeiten für die einzelnen Schaltelemente sind auch kombinierbar. Im einfachsten Fall wird jedoch immer eine koaxiale Anordnung aller Schaltelemente gewählt. Die koaxiale Anordnung ist dabei durch eine kompakte Bauweise sowie das Entfallen der Notwendigkeit einer Zwangskopplung bei eventuell erfolgender Ausgestaltung in symmetrischer Bauweise, d. h. Ausgestaltung des Wechselgetriebes als Summiergetriebe mit zwei Eingängen, wobei die Eingänge parallel zur Rotationsachse angeordnet sind und sich durch einen gleichen Achsabstand auszeichnen.

Gemäß einem zweiten Lösungsansatz wird die Übersetzung wenigstens einer der beiden Drehzahl-/Drehmomentwandlungseinrichtungen der Überbrückungsschaltung zusätzlich als Gangstufenübersetzung genutzt. Auch bei dieser Ausführung ist die Funktionsschaltung in Vorgelegebauweise ausgeführt, d. h. vorzugsweise als Stirnradstufe, welche mit wenigstens einem Eingang des Wechselgetriebes verbindbar ist. Bezüglich des Leistungsflusses ergeben sich die für die primäre Zuordnung der Drehzahl-/Drehmomentwandlungseinrichtungen der Überbrückungsschaltung zu den einzelnen Leistungszweigen für den ersten Lösungsansatz unter Berücksichtigung der zusätzlichen Schaltbarkeit der ersten Drehzahl-/Drehmomentwandlungseinrichtung der Einrichtung zur Überbrückung, d. h. Möglichkeit des Ausschaltens der Funktion des Freilaufes zumindest in einigen Gangstufen die beschriebenen Möglichkeiten, d. h., das Durchlaufen jeder der mit dem hydrodynamischen Zweig koppelbaren Gangstufe des Wechselgetriebes sowohl hydrodynamisch als auch mechanisch und ferner der mit dem Getriebeeingang koppelbaren Gangstufen hydrodynamisch und mechanisch über die einzelnen Drehzahl-Drehmomentwandlungseinrichtungen - erste Drehzahl-/Drehmomentwandlungseinrichtung oder zweite Drehzahl-/Drehmomentwandlungseinrichtung - der Überbrückungsschaltung. Um nunmehr eine der beiden Drehzahl-/Drehmomentwandlungseinrichtungen der Überbrückungsschaltung als zusätzliche Gangstufe für das Wechselgetriebe zu nutzen, ist der Eingang der jeweiligen Drehzahl-/Drehmomentwandlungseinrichtung der Überbrückungsschattung mit dem Ausgang des Wechselgetriebes, insbesondere dem Getriebeausgang, verbindbar. Da die Drehzahl-/Drehmomentwandlungseinrichtungen auch hier vorzugsweise in Vorgelegebauweise ausgeführt sind und diese in axialer Richtung vom Getriebeeingang zum Getriebeausgang räumlich betrachtet parallel zueinander angeordnet sind, wird vorzugsweise die Drehzahl-/Drehmomentwandlungseinrichtung der Überbrückungsschaltung mit dem Ausgang des Wechselgetriebes verbindbar ausgestaltet, welche in axialer Richtung näher zum Getriebeausgang angeordnet ist. Da in der Regel in axialer Richtung betrachtet die erste Drehzahl-/Drehmomentwandlungseinrichtung zwischen der hydrodynamischen Komponente und der zweiten Drehzahl-/Drehmomentwandlungseinrichtung angeordnet ist, wird vorzugsweise die Übersetzung der zweiten Drehzahl-/Drehmomentwandlungseinrichtung als Gangstufenübersetzung genutzt, wobei diese dann lediglich beim hydrodynamischen Durchlaufen der einzelnen Gangstufen als zusätzliche Gangstufe zum Tragen kommt. Soll die erste Drehzahl-/Drehmomentwandlungseinrichtung als zusätzliche Gangstufe nutzbar sein, ist der Freilauf aus der Kopplung herauszunehmen bzw. zu überbrücken. Diese Lösung ist besonders für Ausführungen als Wechselgetriebe in Vorgelegebauweise geeignet. In diesem Fall ist der Ausgang des Wechselgetriebes vorzugsweise koaxial zur Rotationsachse des Anfahrelementes oder mit geringfügigem Versatz parallel dazu angeordnet. Der Ausgang wird dabei von einer Ausgangswelle gebildet, welche, wie bereits ausgeführt, dann koaxial zum Anschlusselement des jeweiligen Anschlusselementes an den Getriebeeingang der Drehzahl-/Drehmomentwandlungseinrichtung, insbesondere der zweiten Drehzahl-/Drehmomentwandlungseinrichtung, ausgeführt ist. Vorzugsweise, d. h. im einfachsten Fall, wird jedoch immer eine koaxiale Anordnung gewählt. Auch hier werden vorzugsweise die einzelnen Schalteinrichtungen koaxial zum Getriebeeingang bzw. zum Getriebeausgang angeordnet. Diese ermöglicht es zum einen Schalteinrichtungen der Einrichtung zur Überbrückung und des Wechselgetriebes auszugestalten, die in Form von Kupplungseinrichtungen durch mehrere Kupplungsebenen charakterisiert sind. Ferner können aufwendige Mehrfachbetätigungen einer Vielzahl von Schaltelementen vermieden werden, da durch diese Anordnung die Anzahl von Schalteinrichtungen auf ein Minimum reduziert wird. Werden Ausführungen mit exzentrischer Anordnung der Schalteinrichtungen zur Rotationsachse der Anfahrelements, d. h. beispielsweise auf der Vorgelegewelle, insbesondere zwischen den Ausgängen der Drehzahl-/Drehmomentwandlungseinrichtung und dem Eingang des Wechselgetriebes gewählt, ist es dazu immer erforderlich, um die volle Funktion der einzelnen Drehzahl-/Drehmomentwandlungseinrichtung zu gewährleisten, mehrere Schalteinrichtungen gleichzeitig betätigen zu müssen. Um dies zu vermeiden, wird, wie bereits ausgeführt, auf die koaxiale Anordnung zurückgegriffen, so dass mit den Eingängen des Wechselgetriebes immer eine drehfeste Verbindung zwischen diesem und den Drehzahl-/Drehmomentwandlungseinrichtungen der Überbrückungsschaltung gewährleistet ist. Dies gilt in Analogie auch für die die einzelnen Gangstufen beschreibenden Drehzahl-/Drehmomentwandlungseinrichtungen des Wechselgetriebes. Auch hier werden die Schalteinrichtungen vorzugsweise nicht in der Kopplung dieser mit der den Eingang bildenden Vorgelegewelle angeordnet, sondern dem Ausgang, insbesondere der auch den Getriebeausgang bildenden Welle zugeordnet.

Die Lösung gemäß dem zweiten Lösungsansatz kann auch mit der Möglichkeit gemäß dem ersten Lösungsansatz kombiniert werden, wobei wenigstens eine der beiden Drehzahl-/Drehmomentwandlungseinrichtungen zusätzlich auch noch als Vorgelegeübersetzung für das Wechselgetriebe im jeweils anderen Leistungszweig verwendbar sein kann, jedoch nur unter der Voraussetzung, dass der Freilauf überbrückt wird, d. h. deaktiviert.

Gemäß einem weiteren mit den anderen beiden kombinierbaren Lösungsansatz ist es vorgesehen, die Anzahl der möglichen Vorgelegeübersetzungen zu erhöhen, indem wenigstens eine eine Gangstufe charakterisierende Drehzahl-/Drehmomentwandlungseinrichtung als Übersetzung einer der beiden Leistungszweige genutzt wird. Dazu wird die die entsprechende Gangstufe bildende Drehzahl-/Drehmomentwandlungseinrichtung in eine der beiden Leistungszweige, d. h. an Primärrad oder Sekundärrad gekoppelt integrierbar gestaltet, wobei dies bei Ausführungen der Funktionsschaltung und des Wechselgetriebes in Vorgelegebauweise dadurch erfolgt, dass der Ausgang der die jeweilige Gangstufe bildenden Drehzahl-/Drehmomentwandlungseinrichtung vom Getriebeausgang entkoppelt wird und mit dem Anschlusselement zum Getriebeeingang verbindbar gestaltet wird. Dies erfolgt in der Regel durch Schalteinrichtungen, welche vorzugsweise in Form von Kupplungseinrichtungen ausgeführt sind. Auch hier besteht eine derartige Kopplungsmöglichkeit nur uneingeschränkt an das Primärrad. Zur Kopplung mit dem Sekundärrad ist der Freilauf zu überbrücken.

Gemäß einem weiteren dritten Lösungsansatz werden bei Ausführungen des Wechselgetriebes mit zwei Eingängen, welche exzentrisch zueinander angeordnet sind und jeweils einer mit der ersten Drehzahl-/Drehmomentwandlungseinrichtung der Überbrückungsschaltung und der zweite mit der zweiten Drehzahl-/Drehmomentwandlungseinrichtung der Überbrückungsschaltung koppelbar ist, die Ausgangsstirnräder, insbesondere wenigstens ein Ausgangsstirnrad einer Gangstufe für mehrere, insbesondere zwei Gangstufen genutzt, indem das Ausgangsstirnrad als gemeinsames Ausgangsstirnrad einer mit der ersten Vorgelegewelle und einer mit der zweiten Vorgelegewelle gekoppelten eine Gangstufe bildendenden Stirnradstufe fungiert, wobei beide Gangstufen in einer axialen Ebene liegen.

Bei allen Lösungsansätzen wird vorzugsweise immer eine Ausführung der Drehzahl-/Drehmomentwandlungseinrichtungen in Vorgelegebauweise gewählt, wobei alle Drehzahl-/Drehmomentwandlungseinrichtungen der Funktionsschaltung und der Gangstufen im wesentlichen parallel in axialer Richtung betrachtet zueinander angeordnet sind. Vorzugsweise sind der Getriebeeingang und der Getriebeausgang koaxial angeordnet. Denkbar ist jedoch auch eine Ausführung zwischen Getriebeeingang und Getriebeausgang in exzentrischer Anordnung. Die einzelnen Schaltelemente werden dabei vorzugsweise immer koaxial zum Getriebeeingang und für das Wechselgetriebe koaxial zum Getriebeausgang angeordnet. Anordnungen bzw. Zuordnungen zur Vorgelegewelle sind ebenfalls denkbar, jedoch für die einzelnen Lösungsansätze mit einer erhöhten Abstimmung hinsichtlich der Betätigung der einzelnen Schalteinrichtungen zur Gewährleistung der erforderlichen Leistungsübertragung gekennzeichnet. Die einzelnen Drehzahl-/Drehmomentwandlungseinrichtungen sind dabei vorzugsweise als Stirnradstufen ausgeführt, wobei diese vorzugsweise mit Schrägverzahnung ausgestaltet sind. Die Schalteinrichtungen können beliebig ausgestaltet sein. Vorzugsweise werden zur Verschleißreduzierung alle schaltbaren Kupplungen als synchron schaltbare formschlüssigen Kupplungen ausgebildet. Gemäß einer besonders vorteilhaften Ausgestaltung ist das Wechselgetriebe als Summiergetriebe ausgeführt, umfassend zwei Eingänge, einen ersten Eingang und einen zweiten Eingang, wobei der erste Eingang von einer ersten Vorgelegewelle gebildet wird und der zweite Eingang von einer zweiten Vorgelegewelle. Der erste und der zweite Eingang sind unter Bildung eines ersten Leistungszweiges über die erste Drehzahl-/Drehmomentwandlungseinrichtung mit dem Sekundärrad und unter Bildung eines zweiten Leistungszweiges über die zweite Drehzahl-/Drehmomentwandlungseinrichtung mit dem in Form des Primärrades vorliegenden Anschlusselementes zum Getriebeeingang verbindbar. Jede Vorgelegewelle ist dazu über wenigstens eine eine Gangstufe charakterisierende Drehzahl-/Drehmomentwandlungseinrichtung des Wechselgetriebes mit dem Getriebeausgang verbindbar. Beide Vorgelegewellen sind parallel und mit gleichem Achsabstand zur Verlängerung der theoretischen Rotationsachse des Anfahrelementes angeordnet. Die Drehzahl-/Drehmomentwandlungseinrichtungen der Überbrückungsschaltung und die wenigstens eine Gangstufe charakterisierenden Drehzahl-/Drehmomentwandlungseinrichtungen sind bezüglich der theoretischen Rotationsachse des Anfahrelementes symmetrisch aufgebaut bzw. angeordnet und somit quasi als Doppelvorgelege ausgeführt. Der ersten und der zweiten Drehzahl-/Drehmomentwandlungseinrichtung sind Mittel zur wahlweisen Gewährleistung oder Unterbrechung der Leistungsübertragung über die erste und zweite Drehzahl-/Drehmomentwandlungseinrichtung zum Wechselgetriebe zugeordnet.Mit dieser Lösung werden durch den bezüglich der theoretischen Rotationsachse symmetrischen Aufbau die Radialkräfte auf die Abtriebswelle, d. h. den Getriebeausgang, aufgehoben. Der entscheidende Vorteil liegt jedoch in der Aufteilung der Momente auf die beiden Vorgelegewellen, so dass die einzelnen leistungsübertragenden Elemente der Drehzahl-/Drehmomentwandlungseinrichtungen der Überbrückungsschaltung und des Wechselgetriebes hinsichtlich der zu übertragenden Leistung nur über die die einzelnen Vorgelegewellen tatsächlich zu übertragenden Momente ausgelegt werden müssen, was sich in einer erheblichen Verringerung der Baugröße niederschlägt. Da insbesondere die maximale Kraft auf jedes Abtriebswellenzahnrad nur halb so groß ist, kann hier ein erheblicher Baulängenvorteil erzielt werden. Zwar sind mehrere Bauteile aufgrund der zusätzlichen symmetrischen Ausführung erforderlich, jedoch ermöglicht diese Bauform neben dem baulichen Vorteil in axialer Richtung auch eine mittigere Schwerpunktslage, welche zu einer gleichmäßigeren Belastung des linken und rechten Lagers der Antriebsmaschine, die mit der Getriebebaueinheit gekoppelt ist, führt. Vorzugsweise sind die beiden Vorgelegewellen, die Überbrückungsschaltung und das Wechselgetriebe symmetrisch zur Verlängerung der symmetrischen Rotationsachse des Anfahrelementes angeordnet. Der Getriebeeingang ist koaxial zum Getriebeausgang ausgeführt. Bezüglich der Ausgestaltung der Mittel zur wahlweisen Gewährleistung oder Unterbrechung der Leistungsübertragung für die zweite Drehzahl-/Drehmomentwandlungseinrichtung zum Wechselgetriebe und der Gangstufen bildenden Drehzahl-/Drehmomentwandlungseinrichtungen des Wechselgetriebes bestehen auch bei dieser Ausführung eine Vielzahl von Möglichkeiten. Da jede Drehzahl-/Drehmomentwandlungseinrichtung der Überbrückungsschaltung einen Eingang und zwei Ausgänge umfasst, die mit den Eingängen des Wechselgetriebes verbindbar sind, bestehen bezüglich der Anordnung der Mittel ebenfalls eine Mehrzahl von Möglichkeiten. Dabei werden die den einzelnen Leistungszweigen, insbesondere Drehzahl-/Drehmomentwandlungseinrichtungen der Überbrückungsschaltung zugeordneten Schaltelemente, der Freilauf und die schaltbare Kupplung vorzugsweise jeweils koaxial zueinander angeordnet. Eine weitere Ausführung besteht darin, in der Verbindung zwischen dem Sekundärrad und den Eingängen des Wechselgetriebes bzw. dem Primärrad mit den Eingängen des Wechselgetriebes die Mittel vorzusehen. Vorzugsweise erfolgt dabei eine Anordnung der Mittel zur Gewährleistung oder Unterbrechung der Leistungsübertragung zwischen den einzelnen Vorgelegen und den Ausgängen der einzelnen Drehzahl-/Drehmomentwandlungseinrichtungen. Dabei ist jedoch darauf zu achten, dass die einzelnen, den einzelnen Vorgelegen zugeordneten Mittel jeweils synchron betätigt werden, um unnötige Verspannungen im Gesamtsystem zu vermeiden. Dies kann durch eine konstruktive Zwangskupplung oder aber steuerungstechnisch, d. h. funktionale Zwangskopplung der Bewegung der einem Leistungszweig zugeordneten Mittel realisiert werden.

In einer vorteilhaften Weiterentwicklung enthält die Getriebebaueinheit auch eine Rückwärtsfahrstufe. Diese kann dabei Bestandteil des Wechselgetriebes sein oder aber auch der Überbrückungsschaltung zugeordnet werden. Im erstgenannten Fall ist diese im Wechselgetriebe integriert und damit an beliebiger Stelle in axialer Richtung im Getriebe betrachtet mit den Eingängen des Wechselgetriebes in Form der Vorgelegewelle gekoppelt, wobei der Ausgang der Rückwärtsfahrstufe mit dem Getriebeausgang drehfest verbunden ist. Auch hier sind die Eingänge symmetrisch angeordnet, so dass die Vorteile bezüglich der Auslegung auch für die Rückwärtsfahrstufe gelten. Gemäß einer besonders vorteilhaften Ausgestaltung kann die Rückwärtsfahrstufe auch vom Wechselgetriebe, d. h. vor der Zuordnung in axialer Richtung zu den Gangstufen der Wechselgetriebe auch in die Überbrückungsschaltung verlegt werden, wobei jedoch die erste Drehzahl-/Drehmomentwandlungseinrichtung in diesem Fall zusätzlich entkoppelbar sein muss.

Die erfindungsgemäße Lösung der Ausführung der Überbrückungsschaltung, bei welcher die einzelnen Drehzahl-/Drehmomentwandlungseinrichtungen in Vorgelegeweise ausgeführt sind, ist für Ausführungen von Getriebebaueinheiten mit Wechselgetrieben mit einem Eingang oder mehreren Eingängen einsetzbar. Im erstgenannten Fall ist lediglich ein Eingang des Wechselgetriebes vorgesehen, vorzugsweise in Form einer Vorgelegewelle, wobei die einzelnen mit dem Getriebeeingang gekoppelten Anschlusselemente - Primärrad oder über das Anfahrelement das Sekundärrad - über die beiden Drehzahl-/Drehmomentwandlungseinrichtungen - erste Drehzahl-/Drehmomentwandlungseinrichtung und zweite Drehzahl-/Drehmomentwandlungseinrichtung - drehfest mit dieser Vorgelegewelle verbindbar sind. Denkbar sind auch Ausführungen mit zwei Eingängen, wobei zwischen Summiergetrieben oder Getrieben mit unterschiedlichen Zweigen unterschieden wird. Im letzten Fall ist die einzelne Drehzahl-/Drehmomentwandlungseinrichtung nur mit einem der beiden Eingänge koppelbar. d. h. jede der beiden Drehzahl-/Drehmomentwandlungseinrichtungen verteilt die Leistung auf eine der beiden Wellen, wobei jedoch bei entsprechender Schaltstellung der Schaltelemente, d. h. bei Betätigung der Schalteinrichtung der zweiten Drehzahl-/Drehmomentwandlungseinrichtung und gleichzeitig vorliegender geringerer Drehzahl an der ersten Vorgelegewelle gegenüber dem Sekundärrad kann der Leistungsfluss auch über beide Drehzahl-/Drehmomentwandlungseinrichtungen geleitet werden kann, wobei in diesem Fall eine Leistungsaufteilung erfolgt und ferner das Wechselgetriebe als Summiergetriebe fungiert, wobei dies voraussetzt, dass beide Vorgelegewellen auch über wenigstens eine eine Gangstufe charakterisierende Drehzahl-/Drehmomentwandlungseinrichtung mit dem Getriebeausgang verbunden ist. Dabei kann es sich gemäß einer besonders vorteilhaften Ausführung auch um Drehzahl-/Drehmomentwandlungseinrichtungen handeln, die zur Realisierung der Gangstufen gleiche Ausgangsstirnräder, die mit dem Getriebeausgang gekoppelt sind, nutzen. Eine derartige Lösung zeichnet sich dann durch eine besonders kompakte Bauweise aus, insbesondere in axialer Richtung, da einzelne Gangstufen in eine Ebene verlagert werden. Bei Ausführung des Wechselgetriebes als Summiergetriebe kann dieses symmetrisch bezogen auf die Rotationsachse des Anfahrelementes oder unsymmetrisch ausgeführt sein. Im ersten Fall sind vorzugsweise die Drehzahl-/Drehmomentwandlungseinrichtungen der Überbrückungsschaltung ebenfalls symmetrisch aufgebaut. Diese umfassen einen Eingang, der wenigstens mittelbar mit dem Getriebeeingang koppelbar ist und zwei Ausgänge, wobei jeweils einer mit einem Eingang des Wechselgetriebes koppelbar ist. In diesem Fall sind theoretisch alle Gangstufen des Wechselgetriebes sowohl hydrodynamisch als auch mechanisch fahrbar.

Gemäß einer besonders vorteilhaften Weiterentwicklung ist es ebenfalls denkbar, eine Lastschalteinrichtung vorzusehen, die vorzugsweise mit der ersten Drehzahl-/Drehmomentwandlungseinrichtung der Überbrückungsschaltung gekoppelt ist. In diesem Fall wird während eines Gangschaltvorganges immer ein Leistungsanteil hydrodynamisch übertragen. Die Lastschalteinrichtung verbindet dabei die erste Drehzahl-/Drehmomentwandlungseinrichtung mit dem Getriebeausgang. Diese ist in Vorgelegebauweise ausgeführt, d. h., es ist mindestens eine exzentrisch zur Rotationsachse des Anfahrelementes angeordnete Lastschaltwelle vorgesehen, die über ein Stirnrad an die erste Drehzahl/Drehmomentwandlungseinrichtung angekoppelt ist und vorzugsweise über ein weiteres Vorgelege mit dem Getriebeausgang, insbesondere der mit dem Getriebeausgang verbundenen Welle drehfest verbindbar ist. Zur Aktivierung der Lastschalteinrichtung ist dieser ein Schaltelement zugeordnet. Dieses ist zwischen Sekundärrad und Getriebeausgang, vorzugsweise der Verbindung zwischen dem Getriebeausgang und dem Vorgelege zur Lastschaltwelle vorgesehen. Denkbar ist auch die Zuordnung zur Lastschaltwelle. Die Lastschalteinrichtung ist dabei dem hydrodynamischen Leistungszweig funktional zugeordnet. Bei Ausführungen mit Freilauf ist darauf zu achten, dass die Anlenkung bzw. Kopplung der ersten Drehzahl-/Drehmomentwandlungseinrichtung im Leistungsfluss zwischen Getriebeeingang und Wechselgetriebe betrachtet vor dem Freilauf erfolgt. Die Stufung der Gänge der Getriebebaueinheit kann geometrisch oder progressiv ausgelegt sein.

Die erfindungsgemäße Lösung wird nachfolgend anhand von Figuren erläutert. Darin ist im Einzelnen folgendes dargestellt:

Figur 1    verdeutlicht in schematisch vereinfachter Darstellung beispielhaft anhand einer Getriebebaueinheit das Grundprinzip des Einsatzes eines Freilaufes als Schalteinrichtung;

Figur 2    verdeutlicht anhand einer Ausführung gemäß Figur 1 eine Getriebebaueinheit mit Lastschalteinrichtung;

Figur 3    verdeutlicht eine hinsichtlich der Rotationsachse R symmetrische Ausführung am Beispiel einer Ausführung gemäß Figur 1;

Figur 4    verdeutlicht beispielhaft anhand einer Getriebebaueinheit mit Nachschaltstufe die Möglichkeit der Ausnutzung einer eine Gangstufe bildenden Drehzahl-/Drehmomentwandlungseinrichtung als Vorgelegeübersetzung für die Überbrückungsschaltung;

Figur 5    verdeutlicht anhand einer Weiterentwicklung von Figur 4 die Möglichkeit der Ausnutzung der Drehzahl- /Drehmomentwandlungseinrichtung der Überbrükkungsschaltung als zusätzliche Vorgelegeübersetzung für den jeweils anderen Leistungszweig;

Figur 6    verdeutlicht anhand einer Einzelheit aus Figur 5 eine besonders vorteilhafte Möglichkeit der Anbindung der ersten Drehzahl- /Drehmomentwandlungseinrichtung der Überbrükkungsschaltung an den Getriebeeingang E;

Figur 7    verdeutlicht anhand einer Ausführung einer Getriebebaueinheit die Möglichkeit der Ausnutzung gemeinsamer Ausgangsstirnräder für die die Gangstufen beschreibenden Drehzahl- /Drehmomentwandlungseinrichtungen.

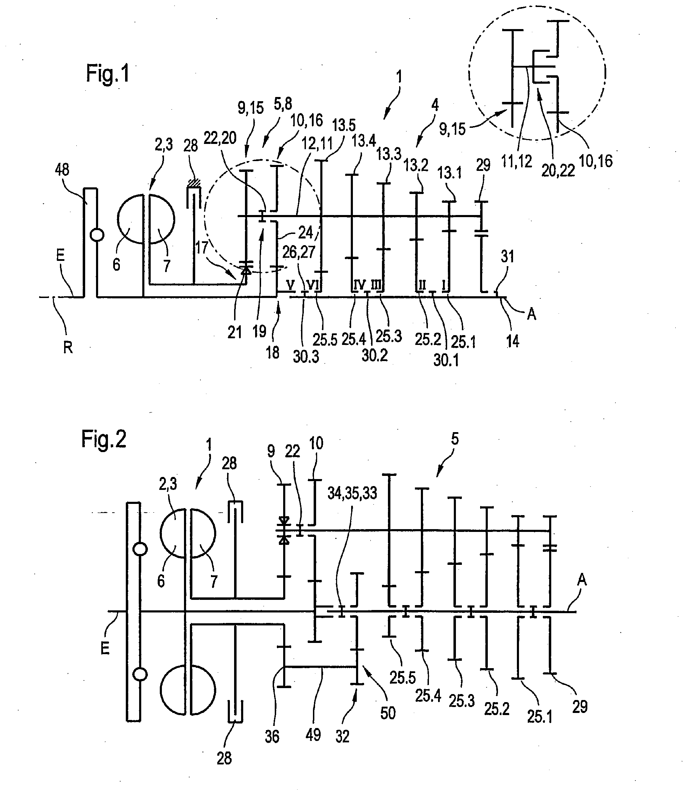

Die Figur 1 verdeutlicht in schematisch vereinfachter Darstellung anhand einer Getriebebaueinheit 1 das Grundprinzip der automatisierten Umschaltung zwischen der hydrodynamischen und mechanischen Leistungsübertragung zwischen Getriebeeingang E und Wechselgetriebe 5. Die Getriebebaueinheit 1 umfasst einen Eingang E und mindestens einen Ausgang A. Ein- und Ausgang können in Wellenform vorliegen oder werden von anderen drehmomentübertragenden Bauteilen gebildet. Zwischen dem Getriebeeingang E und dem Getriebeausgang A sind ein Anfahrelement 2, vorzugsweise in Form einer hydrodynamischen Kupplung 3 und ein mindestens eine Gangstufe umfassendes Wechselgetriebe 4 angeordnet. Ferner ist eine Einrichtung 5 zur Überbrückung der hydrodynamischen Kupplung 3 vorgesehen. Die hydrodynamische Kupplung 3 umfasst ein Primärrad 6, welches wenigstens mittelbar mit dem Eingang E verbindbar, vorzugsweise jedoch drehfest verbunden ist und ein Sekundärrad 7, welches zumindest in einigen Betriebsstufen wenigstens mittelbar, d. h. direkt oder über weitere Übertragungselemente mit dem Getriebeausgang A verbunden ist.
Die hydrodynamische Kupplung 3 ist frei von einem Leitrad und dient lediglich der Drehzahlwandlung, jedoch nicht der Drehmomentwandlung. Die hydrodynamische Kupplung ist steuer- und/oder regelbar, d. h. auch mit Teilfüllung betreibbar. Die Getriebebaueinheit 1 ist derart ausgeführt, dass alle Gänge des Wechselgetriebes 4 zumindest entweder rein mechanisch durch Kopplung eines Einganges 11 des Wechselgetriebes 4 an den Getriebeeingang E gefahren werden können oder aber hydrodynamisch, indem in den einzelnen Gangstufen die Leistungsübertragung vom Getriebeeingang E immer über das Anfahrelement 2, insbesondere die hydrodynamische Kupplung 3, zum Wechselgetriebe 4 erfolgt. Zu diesem Zweck ist die Einrichtung 5 zur Überbrückung der hydrodynamischen Kupplung 3 als Überbrückungsschaltung 8 ausgeführt. Die Überbrückungsschaltung 8 umfasst dazu eine erste Drehzahl-/Drehmomentwandlungseinrichtung 9, die der Kopplung des Sekundärrades 7 bzw. eines mit diesem drehfest verbundenen Elementes mit dem Wechselgetriebe 4, insbesondere dem Eingang 11 des Wechselgetriebes 4 dient. Ferner umfasst die Überbrückungsschaltung 8 eine zweite Drehzahl-/Drehmomentwandlungseinrichtung 10, die das Primärrad 6 bzw. ein drehfest mit diesem gekoppeltes Element oder die Verbindung zwischen dem Primärrad 6 und dem Getriebeeingang E mit dem Wechselgetriebe 4 verbindet. Das Wechselgetriebe 4 umfasst mindestens einen Eingang 11, der im einfachsten Fall in Form einer Vorgelegewelle 12 ausgeführt ist und über mindestens eine eine Gangstufe bildende Drehzahl-/Drehmomentwandlungseinrichtung, hier die Drehzahl-/Drehmomentwandlungseinrichtungen 13.1 bis 13.5 für die Gangstufen I bis V mit dem Getriebeausgang A verbindbar ist. Der Getriebeausgang A ist dabei vorzugsweise koaxial zur theoretischen Rotationsachse R der hydrodynamischen Kupplung 3 angeordnet. Dieser fällt vorzugsweise mit dem Ausgang 14 des Wechselgetriebes 4 zusammen. Denkbar ist auch eine exzentrische Anordnung. Die Kopplung zwischen dem Sekundärrad 7 der hydrodynamischen Kupplung 3 bzw. einem drehfest mit diesem verbundenen Element und dem Wechselgetriebe 4 erfolgt über die erste Drehzahl-/Drehmomentwandlungseinrichtung 9, während die Kopplung zwischen dem Primärrad 6 mit einem drehfest mit diesem gekoppelten Element und dem Wechselgetriebe 4 über die zweite Drehzahl-/Drehmomentwandlungseinrichtung 10 erfolgt. Die einzelnen Drehzahl-/Drehmomentwandlungseinrichtungen 9 und 10 sind dabei vorzugsweise in Form von Stirnradsätzen in Vorgelegebauweise ausgeführt. Diese sind hier für die erste Drehzahl-/Drehmomentwandlungseinrichtung mit 15 und für die zweite Drehzahl-/Drehmomentwandlungseinrichtung 10 mit 16 bezeichnet. Über die erste Drehzahl-/Drehmomentwandlungseinrichtung 9 wird dabei die Leistungsübertragung zwischen dem Getriebeeingang E und dem Eingang 11 des Wechselgetriebes 4 über einen ersten Leistungszweig 17 hydrodynamisch realisiert, während über die Verbindung des Getriebeeingangs E über die zweite Drehzahl-/Drehmomentwandlungseinrichtung 10 mit dem Eingang 11 des Wechselgetriebes 4 ein zweiter Leistungszweig 18 realisiert wird. Dies bedeutet, dass die Leistung zum Wechselgetriebe 4, insbesondere den einzelnen Gangstufen, entweder hydrodynamisch über den ersten Leistungszweig oder mechanisch über den zweiten Leistungszweig übertragen wird. Jede Gangstufe des Wechselgetriebes ist somit theoretisch sowohl mechanisch als auch hydrodynamisch fahrbar. Zur wahlweisen Unterbrechung oder Gewährleistung der Leistungsübertragung über die einzelnen Leistungszweige sind entsprechende Mittel 19 vorgesehen. Diese umfassen mindestens ein der zweiten Drehzahl-/Drehmomentwandlungseinrichtung 10 zugeordnetes Schaltelement, welches je nach Anordnung die Verbindung zwischen dem Primärrad 6 und dem Eingang 11 des Wechselgetriebes 4 wahlweise gewährleistet oder unterbricht. Das Schaltelement 20 ist als Kupplungseinrichtung 22 ausgeführt, welche vorzugsweise in Form einer synchron schaltbaren formschlüssigen Kupplung vorliegt. Dies ermöglicht eine nahezu verschleißfreie Leistungsübertragung über die zweite Drehzahl-/Drehmomentwandlungseinrichtung 10. Erfindungsgemäß ist in der Verbindung zwischen dem Sekundärrad 7 und dem Eingang 11 des Wechselgetriebes 4 ein Freilauf 21 vorgesehen, welcher als drehrichtungsgeschaltete Kupplung fungiert. In diesem Fall ist keine zusätzliche Ansteuerung bei der Umschaltung zwischen der rein mechanischen Leistungsübertragung zum Wechselgetriebe zur hydrodynamischen Leistungsübertragung bzw. umgekehrt erforderlich, da der Freilauf aufgrund der ihm inhärenten Eigenschaften erst bei Drehzahlgleichheit wirksam wird und im anderen Fall als Überholkupplung fungiert. Der Freilauf ermöglicht als drehrichtungsgeschaltete Kupplung im wesentlichen die zwei folgenden Funktionszustände:

1. Ist die Drehzahl auf der Abtriebsseite des Anfahrelementes, d. h. dem Sekundärrad 7 unter Berücksichtigung der Übersetzung gleich oder größer als an der Vorgelegewelle 12, d. h. ist die Drehzahl des mit dem Sekundärrad koppelbaren Elementes des Freilaufs gleich oder größer als die mit der Vorgelegewelle gekoppelten Elementes, wird ein Moment vom Sekundärrad 7 zum Wechselgetriebe 4 übertragen. Dies gilt auch für die Leistungsübertragung vom Wechselgetriebe zum Getriebeeingang.

2. Ist die Drehzahl des Sekundärrades unter Berücksichtigung der Übersetzung, d. h. die Drehzahl an der der Antriebsseite des Freilaufes des Abtriebes des Anfahrelementes geringer als an der mit der Vorgelegewelle gekoppelten Abtriebsseite es Freilaufes, wird über das Sekundärrad kein Moment zum Wechselgetriebe übertragen, das Sekundärrad läuft frei.

Die erfindungsgemäße Lösung bietet neben der Realisierung eines nahezu verschleißfreien Anfahrvorganges den Vorteil, dass während des Schaltvorganges das hydrodynamische Bauelement nicht entleert werden muss, wobei eine Entleerung jedoch von Vorteil für den Wirkungsgrad ist und auch keine zusätzliche Trennkupplung zur Leistungsunterbrechung erforderlich ist. Die Abkoppelung der Getriebeeingangswelle, von den nachgeordneten Schaltstufen erfolgt allein über den Freilauf und sichert somit die Funktion der Synchroneinrichtung im Schaltgetriebe.

Der zweite Leistungszweig ist durch die Kopplung zwischen dem Primärrad 6 und dem Eingang 11 des Wechselgetriebes über die zweite Drehzahl-/Drehmomentwandlungseinrichtung 10 charakterisiert, wobei in diesem Fall die hydrodynamische Komponente im Leistungsfluss umgangen wird. Die hydrodynamische Kupplung wird vorzugsweise entleert, um einen optimalen Wirkungsgrad sicherzustellen. Diese kann aber auch befüllt bleiben, wobei die Leistungsübertragung dann über beide Leistungszweige erfolgt. Lediglich das Primärrad 6 wird mitgeschleppt. Das Sekundärrad 7 dreht frei. Die über die Überbrückungsschaltung 8 realisierte Umgehung der hydrodynamischen Komponente erfolgt somit nicht nur unmittelbar an der hydrodynamischen Komponente selbst, sondern kann an beliebiger Stelle dieser nachgeordnet im Kraftfluss vorgenommen werden. Damit ist es theoretisch auch möglich, die Überbrükkung auch weiter in ein Getriebe bzw. ein Wechselgetriebe zu verlagern, insbesondere wenn die hydrodynamische Komponente als separate Baueinheit ausgeführt ist. Im dargestellten Fall erfolgt die Zuordnung unmittelbar in axialer Richtung betrachtet zwischen Getriebeeingang E und Getriebeausgang A hinter der hydrodynamischen Kupplung 3. In der Überbrückungsschaltung 8 wird bei gewünschter rein mechanischer Leistungsübertragung eine Umgehung der hydrodynamischen Komponente möglich, die frei von einer drehfesten Kopplung zwischen dem Primärrad und dem Sekundärrad ist. Die Überbrückung, d. h. Umgehung des hydrodynamischen Leistungszweiges 17, erfolgt dabei durch Änderung bzw. Wechsel des Leistungsflusses bzw. der beiden Leistungswege über die erste oder zweite Drehzahl-/Drehmomentwandlungseinrichtung 9, 10. Beide Drehzahl-/Drehmomentwandlungseinrichtungen sind zur Realisierung der Überbrückung unter Berücksichtigung des Schlupfes der hydrodynamischen Komponente hinsichtlich des konkret zur Überbrückung vorliegenden Schlupfzustandes dimensioniert. Dazu wird ein bestimmter vordefinierter Schlupfwert an der hydrodynamischen Komponente 2 zugrundegelegt, der frei gewählt sein kann oder aber durch die Leistungsmerkmale der hydrodynamischen Kupplung 3 im Zusammenwirken mit einer Antriebsmaschine charakterisiert ist und der eine bestimmtes vordefiniertes Drehzahlverhältnis zwischen dem Sekundärrad 7 und dem Primärrad 6 charakterisiert. Dieses Drehzahlverhältnis wird bei der Auslegung der beiden Drehzahl-/Drehmomentwandlungseinrichtungen 9, 10 berücksichtigt, so dass diese an den mit dem Eingang 11 gekoppelten Stirnrädern der Stirnradsätze der Drehzahl-/Drehmomentwandlungseinrichtungen 9, 10 berücksichtigt sind. Die Dimensionierung der einzelnen miteinander kämmenden Stirnräder hinsichtlich ihrer Abmessung sowie Zähnezahl und/oder Zahnform und Auslegung ergibt sich dabei als Funktion des

Drehzahlverhältnisses $\dfrac{n_T}{n_P}$ zwischen dem Sekundärrad 7 und dem Primärrad 6. Dadurch ist es möglich, dass bei Leistungsübertragung über den ersten Leistungszweig 17, d. h. hydrodynamischer Leistungsübertragung bei Einstellung des bestimmten Schlupfwertes an der hydrodynamischen Komponente, insbesondere der hydrodynamischen Kupplung der Freilauf aufgrund der ihm inhärenten Eigenschaften nicht mehr als leistungsübertragende Kupplung fungiert, sondern als Überholkupplung und damit den Leistungsfluss im ersten Leistungszweig 17 unterbricht, während die der zweiten Drehzahl-/Drehmomentwandlungseinrichtung 10 zugeordnete Kupplungseinrichtung 22 betätigt wird und die Verbindung zwischen der zweiten Drehzahl-/Drehmomentwandlungseinrichtung und dem Wechselgetriebe 4 realisiert.

Im einzelnen wird dabei die Drehzahl des mit dem Sekundärrad 7 drehfest gekoppelten und über die schaltbare Kupplungseinrichtung 22 mit dem Eingang 11 des Wechselgetriebes 4 zu verbindende Stirnrad der die zweite Drehzahl-/Drehmomentwandlungseinrichtung beschreibenden Stirnradstufe in Höhe der Drehzahldifferenz zur Drehzahl des Primärrades 6 bzw. mit diesem gekoppelten und über den Freilauf 21 mit dem Eingang 11 des Wechselgetriebes 4 verbundenen Elementes verkleinert. Entscheidend ist, dass die Drehzahl-/Drehmomentwandlungseinrichtung 9, 10 immer auf den Mindestschlupf hin auszulegen ist, da die hydrodynamische Komponente nicht schlupffrei arbeitet.

Die erste und die zweite Drehzahl-/Drehmomentwandlungseinrichtung 9 und 10 sind koaxial zur Rotationsachse der hydrodynamischen Kupplung und in axialer Richtung parallel zueinander angeordnet. In Abhängigkeit der Anordnung von Primärrad 6 und Sekundärrad 7 zwischen dem Getriebeeingang E und dem Getriebeausgang A in axialer Richtung betrachtet erfolgt dabei die Anordnung der ersten und zweiten Drehzahl-/Drehmomentwandlungseinrichtung 9, 10 in axialer Richtung nebeneinander. Bei Anordnung des Primärrades 6 in axialer Richtung vor dem Sekundärrad 7 erfolgt die Anordnung der ersten Drehzahl-/Drehmomentwandlungseinrichtung 9 vor der zweiten Drehzahl-/Drehmomentwandlungseinrichtung 10 in axialer Richtung betrachtet. Andere Möglichkeiten sind denkbar. Bezüglich der Ausgestaltung der Drehzahl-/Drehmomentwandlungseinrichtungen 9 und 10 bestehen eine Vielzahl von Möglichkeiten. Dies gilt in Analogie auch für die die Gangstufen des Wechselgetriebes bildenden Drehzahl-/Drehmomentwandlungseinrichtungen 13.1 bis 13.5. Im einfachsten Fall sind diese als Stirnradsätze ausgeführt. Die Stirnradsätze sind dabei für die zweite Drehzahl-/Drehmomentwandlungseinrichtung mit 16 und die erste Drehzahl-/Drehmomentwandlungseinrichtung mit 15 bezeichnet. Die die Gangstufen bildenden Stirnradstufen 25.1 bis 25.5 sind ebenfalls vorzugsweise in Vorgelegebauweise ausgeführt. Die Stirnradsätze umfassen dabei jeweils mindestens zwei miteinander kämmende Stirnräder, wobei für die beiden Drehzahl-/Drehmomentwandlungseinrichtungen jeweils ein erstes Stirnrad drehfest mit dem Anschlusselement zum Getriebeeingang, d. h. dem Sekundärrad 7 oder dem Primärrad 6, verbindbar ist, während die jeweils mit diesem kämmenden zweiten Stirnräder drehfest mit der Vorgelegewelle 12 verbindbar sind. Vorzugsweise besteht dabei entweder jeweils eine drehfeste Verbindung zwischen den Anschlusselementen zum Getriebeeingang E und der jeweiligen Drehzahl-/Drehmomentwandlungseinrichtung, wobei in diesem Fall, wie in der Figur 1 dargestellt, die Kupplungseinrichtung 22 der Kopplung zwischen dem Ausgang dieser Drehzahl-/Drehmomentwandlungseinrichtung 10 und der Vorgelegewelle 12 zugeordnet ist. Dies gilt in Analogie auch für die Anordnung des Freilaufes 21, wobei dieser dann in der Verbindung zwischen dem den Ausgang der ersten Drehzahl-/Drehmomentwandlungseinrichtung 10 bildenden Stirnrad und der Vorgelegewelle 12 integriert ist. In diesem Fall sind die mit den Anschlusselementen zum Getriebeeingang E gekoppelten Stirnräder der beiden Drehzahl-/Drehmomentwandlungseinrichtungen 9, 10 jeweils drehfest mit diesen verbunden. Denkbar ist auch der andere Fall, die schaltbare Kupplungseinrichtung 22 und den Freilauf 21 koaxial zur Rotationsachse R der hydrodynamischen Kupplung 3 anzuordnen. In diesem Fall wären die beiden Elemente in der Verbindung zwischen dem Anschlusselement zum Getriebeeingang und der jeweiligen Drehzahl-/Drehmomentwandlungseinrichtung 9, 10 integriert.

Durch die beiden Drehzahl-/Drehmomentwandlungseinrichtungen 9, 10 der Überbrückungsschaltung 8 wird zusätzlich eine Übersetzung für die nachfolgend betätigten Gangstufen des Wechselgetriebes realisiert. Die Größe ist dabei abhängig von der Größe der Übersetzung in der Drehzahl-/Drehmomentwandlungseinrichtung 9, 10. Um jedoch auch eine direkte starre Kopplung zwischen dem Getriebeeingang und dem Getriebeausgang zu schaffen, ist des weiteren ein Schaltelement 26 in Form einer Kupplungseinrichtung 27 vorgesehen, die zwischen dem Getriebeeingang E und dem Getriebeausgang A angeordnet ist, vorzugsweise die Verlängerung der mit dem Primärrad 6 gekoppelten Welle mit der den Getriebeausgang A bildenden Welle verbindet. Die Kupplungseinrichtung ist dabei koaxial zum Getriebeeingang und Getriebeausgang A angeordnet. Mit dieser Anordnung kann dann ein Durchtrieb zwischen dem Getriebeeingang und dem Getriebeausgang realisiert werden, wobei in diesem Fall von einem direkten Gang mit Übersetzung 1:1 gesprochen wird. Diese Schaltstellung wird für den Durchtrieb im direkten Gang gewählt, Wobei dann die Kupplungseinrichtung 22 deaktiviert sein kann und ferner der Freilauf 21 aufgrund der größeren Drehzahl am Primärrad 6 nicht als Kupplung fungiert.

Gemäß einer besonders vorteilhaften Ausgestaltung ist ferner dem Sekundärrad 7 eine Bremseinrichtung 28 zugeordnet. Diese kann vielgestaltig ausgeführt sein. Diese dient der Abbremsung und/oder Festsetzung des Sekundärrades 7, wobei bei mechanischer Leistungsübertragung die hydrodynamische Kupplung 3 bei Befüllung als hydrodynamischer Retarder fungiert, indem sich das Sekundärrad 7 über die jeweils eingelegte Gangstufe im Wechselgetriebe am als Stator fungierenden Sekundärrad 7 abstützt. Ferner ist die Bremseinrichtung 28 derart ausgebildet, dass diese in der Verbindung zwischen dem Sekundärrad 7 und dem Eingang des Wechselgetriebes 4 vor dem Freilauf 21 wirkt, d. h., die Anbindung eines der Bremselemente, bei Ausführung der Bremseinrichtung 28 als mechanische Bremseinrichtung, erfolgt dabei in der Verbindung zwischen Sekundärrad und Freilauf 21. Die Bremseinrichtung 28 ist ferner als Vorgelegebremse für die erste Drehzahl-/Drehmomentwandlungseinrichtung 9 nutzbar, und zwar dann, wenn der Freilauf reibschlüssig arbeitet. Die Realisierung der Retarderfunktion über die hydrodynamische Kupplung 3 bietet den Vorteil, dass auf eine separate Bremseinrichtung verzichtet werden kann.

Zur Realisierung des Rückwärtsganges ist im Wechselgetriebe 4 eine Rückwärtsfahrstufe 29 integriert. Diese ist vorzugsweise in axialer Richtung betrachtet hinter den einzelnen die Gangstufen beschreibenden Drehzahl-/Drehmomentwandlungseinrichtungen 13.1 bis 13.5 angeordnet. Wie bereits ausgeführt, sind die einzelnen, die Gangstufen beschreibenden Drehzahl-/Drehmomentwandlungseinrichtungen 13.1 bis 13.5 ebenfalls als Stirnradstufen 25.1 bis 25.5 ausgeführt, wobei der Eingang dieser Stirnradstufen 25.1 bis 25.5 in Form eines Stirnrades vorzugsweise drehfest mit der Vorgelegewelle 12 und damit dem Eingang 11 des Wechselgetriebes 4 verbunden ist, während der Ausgang der Drehzahl-/Drehmomentwandlungseinrichtungen 13.1 bis 13.5 über entsprechende Schaltelemente, hier 30.1 bis 30.3, mit dem Getriebeausgang A verbindbar ist, wobei der Getriebeausgang A vorzugsweise in Form einer Welle vorliegt. Dabei ist vorzugsweise wenigstens zwei Drehzahl-/Drehmomentwandlungseinrichtungen, hier den Drehzahl-/Drehmomentwandlungseinrichtungen 13.1 und 13.2, ein gemeinsames Schaltelement 30.1 zugeordnet. Für die beiden Drehzahl-/Drehmomentwandlungseinrichtungen 13.3 und 13.4 ist das Schaltelement mit 30.2 bezeichnet, während für die Drehzahl-/Drehmomentwandlungseinrichtung 13.5 das Schaltelement 30.3 vorgesehen ist, welches vorzugsweise gleichzeitig zur Realisierung des Direktganges, d. h. der Ankopplung des Primärrades 6 bzw. einer drehfest mit dem Getriebeeingang gekoppelten Verlängerung dient und die Kupplung 27 beinhaltet. Die Schaltelemente 30.1 bis 30.3 können theoretisch auch der Vorgelegewelle 12 zugeordnet werden. Dies gilt in Analogie auch für das der Rückwärtsfahrstufe 29 zugeordnete Schaltelement 31. Die Rückwärtsfahrstufe 29 ist dabei durch eine hinsichtlich der Anzahl der miteinander kämmenden Stirnräder abweichende Anzahl gegenüber den die Gangstufen bildenden Drehzahl-/Drehmomentwandlungseinrichtungen 13.1 bis 13.5 charakterisiert, wobei die Abweichung lediglich hinsichtlich der Art gerade oder ungerade erfolgt. Der Rückwärtsgang kann somit immer zumindest mechanisch als auch hydrodynamisch gefahren werden.

Die einzelnen Schaltelemente, insbesondere der Überbrückungsschaltung 8 und die den Gangstufen beschreibenden Drehzahl-/Drehmomentwandlungseinrichtungen 13.1 bis 13.5 zugeordneten Schaltelemente, können unterschiedlich ausgeführt sein. Vorzugsweise werden jedoch für alle als formschlüssige synchron schaltbare Kupplungseinrichtungen ausgebildet, welche vorzugsweise in Form einer Klauenkupplung vorliegen.

Die Getriebebaueinheit 1 umfasst vorzugsweise ferner eine Vorrichtung 40 zur Dämpfung von Schwingungen, die dem Getriebeeingang E zugeordnet ist und dem Anfahrelement 2 und/oder der Überbrückungsschaltung 8 vorgeschaltet ist.

Die Figur 2 verdeutlicht anhand einer Ausführung gemäß Figur 1 eine Weiterentwicklung mit Lastschalteinrichtung 32. Diese ermöglicht die Realisierung des Schaltvorganges frei von Zugkraftunterbrechungen unter Last. Diese ist einer der beiden Drehzahl-/Drehmomentwandlungseinrichtungen, hier der Drehzahl-/Drehmomentwandlungseinrichtung 9 und damit dem hydrodynamischen Zweig zugeordnet und mit dieser drehfest gekoppelt. Diese umfasst eine Lastschaltwelle 49 und ein Vorgelege 50, welches die Lastschaltwelle 49 mit dem Getriebeausgang A verbindet. Ferner sind Mittel zur Kopplung der Lastschaltwelle 49 mit dem Getriebeausgang A vorgesehen. Diese sind mit 33 bezeichnet und umfassen in der Regel ein Schaltelement, welches vorzugsweise als synchron schaltbare formschlüssige Kupplungseinrichtung 35 ausgeführt ist. Da die Lastschalteinrichtung 32 in Vorgelegebauweise ausgeführt ist, werden die die Lastschaltwelle 49 mit den Anschlusselementen koppelbaren Drehzahl-/Drehmomentwandlungseinrichtungen auch über Stirnradsätze realisiert. Das mit dem Sekundärrad koppelbare Vorgelege umfasst dabei ein erstes Stirnrad 36, welches mit einem mit dem Sekundärrad 7 drehfest, vorzugsweise direkt mit dem Eingang gekoppelten Stirnrad der ersten Drehzahl-/Drehmomentwandlungseinrichtung 9 kämmt und drehfest mit der Lastschaltwelle 49 verbunden ist, wobei das mit dieser wiederum gekoppelte Vorgelege 50 über das koaxial zum Getriebeausgang A angeordnete Schaltelement 31 mit diesem verbindbar ist. Die Lastschalteinrichtung 32 wird dabei jeweils bei Umschaltung zwischen den einzelnen Gangstufen im Wechselgetriebe betätigt, wobei die Leistungsübertragung in diesem Fall sowohl hydrodynamisch als auch mechanisch erfolgt, d. h., die zweite Drehzahl-/Drehmomentwandlungseinrichtung 10 ist ebenfalls aktiviert, d. h., die Leistungsübertragung erfolgt in zwei Leistungszweigen. Die Anordnung des Freilaufes erfolgt in diesem Fall jedoch zwischen der ersten Vorgelegewelle 12 und dem Ausgang der Drehzahl-/Drehmomentwandlungseinrichtung 10. Der übrige Grundaufbau entspricht dem in der Figur 1 beschriebenen, weshalb für gleiche Elemente die gleichen Bezugszeichen verwendet werden.

Bei der Lasthochschaltung kann die hydrodynamische Komponente, insbesondere die hydrodynamische Kupplung, teil- oder vollgefüllt bleiben. Die Bremseinrichtung 28 wird zur Ansteuerung bzw. Erzielung der Drehzahlgleichheit zur Betätigung der Schalteinrichtung 34 kurzzeitig betätigt, insbesondere um hier eine Abbremsung zu erzielen. Zusätzlich kann auch die hydrodynamische Kupplung zur Ansteuerung verwendet werden, indem hier der Füllungsgrad variiert wird. Die Konstantendrehzahl sinkt dabei um den Gangstufensprung, während die Abtriebsdrehzahl am Ausgang nahezu konstant gehalten werden kann. Diese Ausführung eignet sich für Anwendungen mit zusätzlicher Gruppenschaltung nur, wenn die Gruppe bereits synchronisiert ist. In Analogie gelten diese Ausführungen auch für die Lastschaltrückschaltung, wobei die Konstantendrehzahl hierbei um den Gangstufensprung ansteigt und die Abtriebsdrehzahl wiederum nahezu konstant bleibt. Unter Konstantendrehzahl wird dabei die Drehzahl an der ersten Drehzahl-/Drehmomentwandlungseinrichtung verstanden, d. h. Drehzahl an der Nebenwelle.

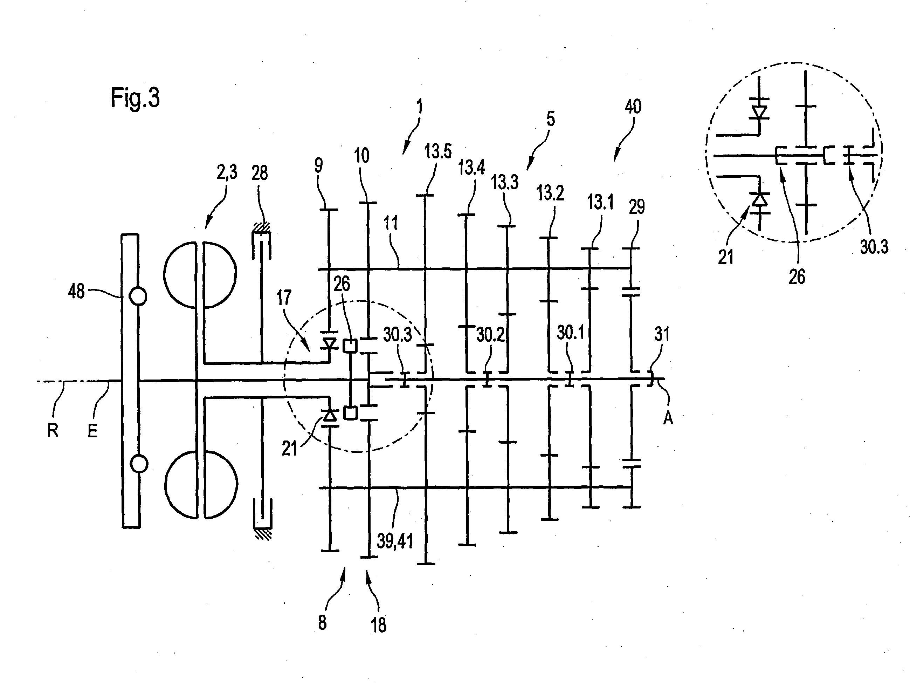

Die Figur 3 verdeutlicht anhand einer Weiterentwicklung gemäß Figur 1 die Ausführung als sogenannter eineiiger Zwilling, d. h. das Wechselgetriebe 4 ist hier als Summiergetriebe 40 ausgeführt, umfassend einen weiteren Eingang 39, welcher ebenfalls in Form einer Vorgelegewelle 41 vorliegt. Jede der Drehzahl-/Drehmomentwandlungseinrichtungen 9 und 10 ist dabei mit den beiden Eingängen 11 und 39 verbindbar, wobei jedoch bei Leistungsübertragung über die einzelne Drehzahl-/Drehmomentwandlungseinrichtung 9 oder 10 der Überbrückungsschaltung 8 darauf abzustellen ist, dass diese jeweils gleichzeitig bzw. synchron mit beiden Eingängen 11 und 39 des Wechselgetriebes 4 verbunden ist. Beide Vorgelegewellen 11 und 41 sind parallel und mit gleichem Achsabstand zur Verlängerung der theoretischen Rotationsachse des Anfahrelementes, insbesondere der hydrodynamischen Kupplung 3, angeordnet. Die Drehzahl-/Drehmomentwandlungseinrichtungen 9, 10 der Überbrückungsschaltung 8 und die wenigstens eine Gangstufe charakterisierenden Drehzahl-/Drehmomentwandlungseinrichtungen 13.1 bis 13.5 sind bezüglich einer Achse, die durch die Verlängerung der theoretischen Rotationsachse der hydrodynamischen Kupplung 3 beschreibbar ist, symmetrisch aufgebaut. Auch hier umfassen die Mittel zur wahlweisen Gewährleistung oder Unterbrechung der Leistungsübertragung über die erste und zweite Drehzahl-/Drehmomentwandlungseinrichtung 9 und 10 zum Wechselgetriebe 4 mindestens einen Freilauf 21, der der ersten Drehzahl-/Drehmomentwandlungseinrichtung zugeordnet ist. Bei koaxialer Anordnung des Freilaufes 21 und damit Integration zwischen Sekundärrad 7 und Eingang der Drehzahl-/Drehmomentwandlungseinrichtung 9 ist lediglich ein Freilauf 21 erforderlich. Ist der Freilauf 21 jedoch der Vorgelegewelle 12 bzw. 41 zugeordnet, sind zwei vorzusehen, d. h. jeder Vorgelegewelle ist ein Freilauf zugeordnet, was hier jedoch nicht dargestellt ist. Dies gilt in Analogie für das Schaltelement 26 der zweiten Drehzahl-/Drehmomentwandlungseinrichtung 10. Vorzugsweise ist lediglich ein derartiges Schaltelement vorgesehen, welches koaxial zur Rotationsachse der hydrodynamischen Kupplung 3 angeordnet ist. Denkbar wäre jedoch auch die Zuordnung jeweils zu den einzelnen Vorgelegewellen 12 und 41, wobei hier auf eine synchrone Betätigung eines der Drehzahl-/Drehmomentwandlungseinrichtung 10 zugeordneten Schaltelementes abzustellen ist. Die Drehzahl-/Drehmomentwandlungseinrichtungen 9 und 10 der Überbrückungsschaltung 8 und die wenigstens eine Gangstufe charakterisierenden Drehzahl-/Drehmomentwandlungseinrichtungen 13.1 bis 13.5 sind dabei bezüglich einer Achse, die durch die Verlängerung der theoretischen Rotationsachse R der hydrodynamischen Kupplung 3 beschreibbar ist, symmetrisch aufgebaut und somit quasi als Doppelvorgelege ausgeführt. Durch den bezüglich der theoretischen Rotationsachse R symmetrischen Aufbau werden die Radialkräfte auf die Abtriebswelle, d. h. auf die mit dem Getriebeausgang verbundene Welle aufgehoben. Der entscheidende Vorteil liegt jedoch in der Aufteilung der Momente auf die beiden einzelnen Vorgelegewellen 12 und 41, so dass die einzelnen leistungsübertragenden Elemente der Drehzahl-/Drehmomentwandlungseinrichtungen 9, 10 der Überbrückungsschaltung 8 und 13.1 bis 13.5 des Wechselgetriebes 4 hinsichtlich der zu übertragenden Leistung nur für die über die die einzelnen Vorgelegewellen tatsächlich zu übertragenden Momente ausgelegt werden müssen, was sich in einer erheblichen Verringerung der Baugröße niederschlägt. Da insbesondere die maximale Kraft auf jedes Abtriebswellenzahnrad, d. h. mit dem Getriebeausgang A gekoppeltes Stirnrad der die Gangstufen beschreibenden Drehzahl-/Drehmomentwandlungseinrichtungen nur halb so groß ist, kann hier ein erheblicher Baulängenvorteil erzielt werden. Zwar sind mehrere Bauteile aufgrund der zusätzlichen symmetrischen Ausführungen erforderlich, jedoch ermöglicht diese Bauform neben dem baulichen Vorteil in axialer Richtung auch eine mittigere Schwerpunktslage, welche zu einer gleichmäßigeren Belastung des linken und rechten Lagers der Antriebsmaschine, die mit der Getriebebaueinheit koppelbar ist, führt. Figur 3 verdeutlicht die besonders vorteilhaft koaxiale Anordnung der Schalteinrichtungen und des Freilaufes 21 zur Rotationsachse R.

Alle in den Figuren 1 bis 3 beschriebenen möglichen Ausführungen können miteinander kombiniert werden.

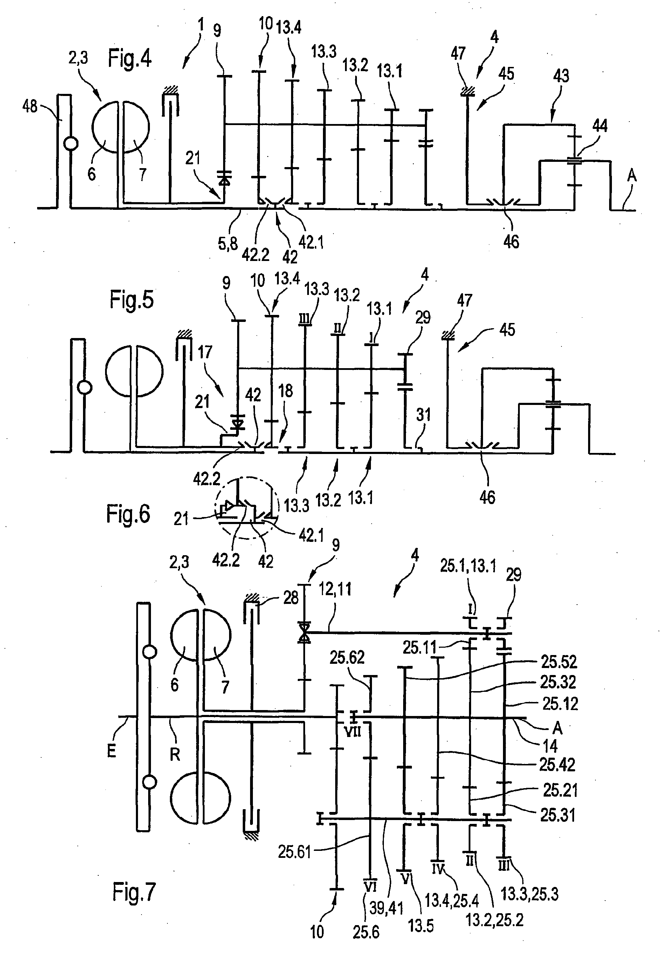

Gemäß einer besonders vorteilhaften Weiterentwicklung ist es ferner möglich, einzelne Drehzahl-/Drehmomentwandlungseinrichtungen der Überbrückungsschaltung 8 und/oder des Wechselgetriebes 4 mehrfach zu nutzen. Eine erste Möglichkeit ist in der Figur 5 beispielhaft beschrieben. Für diese Ausführung wird eine eine Gangstufe bildende Drehzahl-/Drehmomentwandlungseinrichtung, hier die Drehzahl-/Drehmomentwandlungseinrichtung 13.4, zusätzlich als Vorgelegeübersetzung für die einzelnen Gangstufen des Wechselgetriebes genutzt, d. h. im konkreten Fall die verbleibenden gangstufenbeschreibenden Drehzahl-/Drehmomentwandlungseinrichtungen 13.1 bis 13.3. Dazu wird die die Gangstufe 4 beschreibende Drehzahl-/Drehmomentwandlungseinrichtung 13.4 zusätzlich über ein Schaltelement 42 mit dem Getriebeeingang E verbindbar gestaltet, d. h. mit der drehfesten Verbindung zwischen Getriebeeingang E und Primärrad 6 koppelbar. Die die Gangstufe beschreibende Drehzahl-/Drehmomentwandlungseinrichtung 4 weist dabei eine unterschiedliche Übersetzung zur Übersetzung der zweiten Drehzahl-/Drehmomentwandlungseinrichtung 10 der Überbrückungsschaltung 8 auf. Beiden Drehzahl-/Drehmomentwandlungseinrichtungen, der zweiten Drehzahl-/Drehmomentwandlungseinrichtung 10 der Überbrückungsschaltung 8 und der Drehzahl-/Drehmomentwandlungseinrichtung 13.4 ist entweder jeweils ein separates Schaltelement zugeordnet, wobei beide für sich alleine zwar betätigt werden können, jedoch nur eines von beiden Schaltelementen mit der jeweiligen Drehzahl-/Drehmomentwandlungseinrichtung in Eingriff stehen kann. Vorzugsweise wird ein gemeinsames Schaltelement 42 verwendet, welches zwei Kupplungsebenen 42.1, 42.2 aufweist, die hinsichtlich ihrer Betätigung zwangsgekoppelt sind, so dass jeweils nur eine der beiden Übersetzungen als Vorgelegeübersetzung zur mechanischen Leistungsübertragen zum Eingang des Wechselgetriebes 4 möglich ist. Diese Kupplungseinrichtung ist im dargestellten Fall als reibschlüssige Kupplung ausgeführt. Denkbar wäre jedoch auch unter der Voraussetzung entsprechender Synchronisiermaßnahmen die Ausgestaltung als formschlüssige synchron schaltbare Kupplung.

Bezüglich der Anbindung der ersten Drehzahl-/Drehmomentwandlungseinrichtung wird auf die Ausführung zur Figur 1 verwiesen.

Die Ausführung gemäß Figur 4 ermöglicht einen.zusätzlichen mechanischen Betrieb der Gangstufen mit unterschiedlicher Vorgelegeübersetzung, d. h. die bzw. ein Großteil der mechanischen Gangstufen kann zweimal durchlaufen werden. Die in der Figur 4 dargestellte Getriebebaueinheit 1 umfasst ferner eine Nachschaltstufe 43, welche im dargestellten Fall als Planetenradsatz 44 ausgeführt ist. Dabei ist ein Eingang des Planetenradsatzes mit dem Ausgang des Wechselgetriebes verbunden, wobei der Eingang hier beispielhaft vom Sonnenrad gebildet wird. Der Ausgang des Planetenradsatzes wird hier vom Steg gebildet, welcher gleichzeitig den Ausgang der Getriebebaueinheit 1 bildet bzw. mit diesem zusammenfällt. Zur Realisierung unterschiedlicher Übersetzungen sind dem Planetengetriebe 44 eine Bremseinrichtung 45 und eine Kupplungseinrichtung 46 zugeordnet, wobei die Kupplungseinrichtung 46 der drehfesten Verbindung zwischen Steg und Hohlrad dient, während die Bremseinrichtung 45 der Festsetzung des Hohlrades bzw. Abstützung ortsfest am Gehäuse 47, welches vorzugsweise vom Getriebegehäuse gebildet werden kann, dient.

Gemäß einer besonders vorteilhaften Weiterentwicklung in Figur 5 kann ein Stirnradsatz eingespart werden, indem wenigstens eine der beiden Drehzahl-/Drehmomentwandlungseinrichtungen 9, 10 der Überbrückungsschaltung 8, hier vorzugsweise die erste Drehzahl-/Drehmomentwandlungseinrichtung 9, zusätzlich optional in den jeweils anderen Leistungszweig, hier den Leistungszweig 18 integriert werden. Dies wird dadurch erreicht, dass die erste Drehzahl-/Drehmomentwandlungseinrichtung 9 sowohl an das Sekundärrad 7 über den Freilauf 21 koppelbar ist als auch wahlweise an das Primärrad 6 bzw. den drehfest mit diesem gekoppelten Getriebeeingang E über die Kupplungseinrichtung 42, insbesondere die Kupplungsebene 42.2. Zusätzlich oder alternativ ist ferner die Drehzahl-/Drehmomentwandlungseinrichtung 10 der Überbrückungsschaltung als Gangstufe im Wechselgetriebe 4 nutzbar. Dies wird dadurch realisiert, dass der mit dem Primärrad 6 koppelbare Eingang der Drehzahl-/Drehmomentwandlungseinrichtung entweder wahlweise mit dem Primärrad oder aber dem Getriebeausgang A verbindbar ist.

Figur 6 verdeutlicht eine Weiterentwicklung gemäß Figur 5, bei welcher die Kopplung zwischen Getriebeeingang E und erster Drehzahl-/Drehmomentwandlungseinrichtung 9 direkt über die zweite Kupplungsebene 42.2 erfolgt.

Die Figur 7 verdeutlicht eine alternative Getriebeausführung, bei welcher das Wechselgetriebe 5 zwei Eingänge umfasst, einen ersten Eingang 11 in Form einer Vorgelegewelle 12 und einen weiteren zweiten Eingang 39 in Form einer Vorgelegewelle 41, wobei das Wechselgetriebe je nach Schaltstellung nur teilweise als Summiergetriebe betrieben wird. Das Wechselgetriebe umfasst ferner einen Ausgang 14, welcher hier wiederum mit dem Ausgang der Getriebebaueinheit A zusammenfällt. Der Grundaufbau bezüglich des Anfahrelementes entspricht dem in den Figuren 1 bis 6 beschriebenen, weshalb für gleiche Elemente wieder die gleichen Bezugszeichen verwendet werden. Dies gilt in Analogie für die Bremseinrichtung sowie die beiden Drehzahl-/Drehmomentwandlungseinrichtungen 9 und 10. Bei der in der Figur 7 dargestellten Ausführung ist jedoch der erste Eingang 11 des Wechselgetriebes 5 über die erste Drehzahl-/Drehmomentwandlungseinrichtung 9 mit dem Sekundärrad 7 und damit über die hydrodynamische Kupplung 3 mit dem Getriebeeingang bei Betrieb der hydrodynamischen Kupplung 3 verbunden. Die Leistung wird somit nur zur ersten Vorgelegewelle 12 hydrodynamisch übertragen. Die zweite Drehzahl-/Drehmomentwandlungseinrichtung 10 dient dabei der Verbindung zwischen dem Primärrad 6 bzw. der Verbindung zwischen diesem und dem Getriebeeingang E mit der zweiten Vorgelegewelle 41. Dies bedeutet, dass die beiden Drehzahl-/Drehmomentwandlungseinrichtungen 9; 10 nicht koaxial bezüglich der Vorgelegewellen zueinander angeordnet sind, sondern parallel und parallel zur Rotationsachse R des Anfahrelementes. Jede der Vorgelegewellen 12 und 41 ist dabei jedoch über gangstufenbildende Drehzahl-/Drehmomentwandlungseinrichtungen, hier beispielhaft 13.1 für die erste Gangstufe, 13.2 für die zweite Gangstufe, 13.3 für die dritte Gangstufe, 13.4 für die vierte Gangstufe und 13.5 für die fünfte Gangstufe sowie 13.6 für die sechste Gangstufe mit dem Getriebeausgang A verbindbar. Dabei sind die Gangstufen jedoch derart ausgeführt, vorzugsweise in Vorgelegebauweise, dass für einzelne gangstufenbildende Drehzahl-/Drehmomentwandlungseinrichtungen gleiche Abtriebsräder, d. h. Stirnräder, die mit dem Getriebeausgang A gekoppelt sind, genutzt werden. Dies gilt im dargestellten Fall beispielhaft für die gangstufenbildenden Drehzahl-/Drehmomentwandlungseinrichtungen 13.1 und 13.2, deren Ausgang von einem gemeinsamen Element in Form eines Stirnrades, welches drehfest mit dem Getriebeausgang gekoppelt ist, gebildet wird. Es werden somit Drehzahl-/Drehmomentwandlungseinrichtungen, welche Gangstufen bilden, in eine Ebene gelegt. Diese Anordnung in einer Ebene in axialer Richtung betrachtet bedingt die gemeinsame Nutzung einzelner Elemente, insbesondere des jeweiligen Ausgangsstirnrades der einzelnen gangstufenbildenden Drehzahl-/Drehmomentwandlungseinrichtung. In Analogie gilt diese Aussage auch für die Rückwärtsfahrstufe 29, welche im dargelegten Fall in eine Ebene mit der die dritte Gangstufe bildenden Drehzahl-/Drehmomentwandlungseinrichtung 13.3 gelegt wurde. Dazu nutzt die Rückwärtsfahrstufe 29 gemeinsam mit der gangstufenbildenden Drehzahl-/Drehmomentwandlungseinrichtung 13.3 das mit dem Ausgang A gekoppelt Ausgangsstirnrad, hier 25.22. Dabei sind für alle die Gangstufen charakterisierenden Drehzahl-/Drehmomentwandlungseinrichtungen die Stirnradsätze mit 25.1 bis 25.6 bezeichnet. Die einzelnen Stirnräder, die jeweils mit den Vorgelegewellen 11 bzw. 41 verbindbar sind, sind dabei mit 25.11 bis 25.61 bezeichnet, während die mit dem Getriebeausgang A bzw. zumindest dem Ausgang des Wechselgetriebes 14 gekoppelten Stirnräder mit 25.12 bis 25.62 bezeichnet sind. Vorzugsweise sind dabei die mit dem Getriebeausgang gekoppelten Stirnräder 25.12 bis 25.62 drehfest mit diesen verbunden, während die mit den Vorgelegewellen koppelbaren Stirnräder 25.11 bis 25.61 über entsprechende Schaltelemente mit den Vorgelegewellen koppelbar sind. Dies gilt auch für die Rückwärtsfahrstufe 29. Bei befüllter Kupplung ist auch eine gleichzeitige Leistungsübertragung über die erste und zweite Drehzahl-/ Drehmomentwandlungseinrichtung möglich.

Bezugszeichenliste

| 1 | Getriebebaueinheit |
|---|---|
| 2 | Anfahrelement |
| 3 | hydrodynamische Kupplung |
| 4 | Wechselgetriebe |
| 5 | Einrichtung zur Überbrückung der hydrodynamischen Kupplung |
| 6 | Primärrad |
| 7 | Sekundärrad |
| 8 | Überbrückungsschaltung |
| 9 | erste Drehzahl-/Drehmomentwandlungseinrichtung |
| 10 | zweite Drehzahl-/Drehmomentwandlungseinrichtung |
| 11 | Eingang |
| 12 | Vorgelegewelle |
| 13.1-13.5 | Drehzahl-/Drehmomentwandlungseinrichtung |
| 14 | Ausgang des Wechselgetriebes |
| 15 | Stirnradsatz |
| 16 | Stirnradsatz |
| 17 | erster Leistungszweig |
| 18 | zweiter Leistungszweig |
| 19 | Mittel zur wahlweisen Leistungsübertragung über einen der beiden Leistungszweige |
| 20 | Schaltelement |
| 21 | Freilauf |
| 22 | Kupplungseinrichtung |
| 23 | Schaltelement |
| 24 | Stirnrad |
| 25.1-25.5 | Stirnradstufe |
| 26 | Schaltelement |
| 27 | Kupplungseinrichtung |
| 28 | Bremseinrichtung |
| 29 | Rückwärtsfahrstufe |
| 30.1 bis 30.3 | Schaltelement |
| 31 | Schaltelement |
| 32 | Lastschalteinrichtung |
| 33 | Mittel zur Kopplung der Lastschaltwelle mit dem Getriebeausgang |
| 34 | Schaltelement |
| 35 | synchron schaltbare formschlüssige Kupplung |
| 36 | Stirnrad |
| 37 | Schaltelement |
| 38 | Kupplungseinrichtung |
| 39 | Eingang |
| 40 | Summiergetriebe |
| 41 | Vorgelegewelle |
| 42 | Schaltelement |
| 43 | Nachschaltstufe |
| 44 | Planetenradsatz |
| 45 | Bremseinrichtung |
| 46 | Kupplungseinrichtung |
| 47 | Gehäuse |
| 48 | Dämpfungseinrichtung |
| 49 | Lastschaltwelle |
| 50 | Vorgelege |
| E | Eingang |
| A | Ausgang |

**Patentansprüche**

1.  Getriebebaueinhelt (1);

    1.1 mit einem Getriebeeingang (E) und mindestens einem Getriebeausgang (A);

    1.2 mit einem Anfahrelement (2) in Form einer steuer- und/oder regelbaren hydrodynamischen Kupplung (3), umfassend ein Primärrad (6) und ein Sekundärrad (7), die miteinander einen mit Betriebsmittel befüllbaren Arbeitsraum bilden;

    1.3 mit einer der hydrodynamischen Kupplung (3) zugeordneten Einrichtung (5) zur Überbrückkung:

    1.4 mit einem Wechselgetriebe (4), umfassend mindestens einen Eingang (11, 39) und einen Ausgang (14), der mit dem Ausgang (A) der Getrlebebauelnheit (1) drehfest verbunden ist oder diesen bildet, umfassend mindestens eine eine Gangstufe bildende Drehzahl-/Drehmomentwandlungseinrichtung (13.1 bis 13.6):

    1.5 die Einrichtung (5) zur Überbrückung umfasst eine Überbrückungsschaltung (8) zur zumindest wahlweisen Leistungsübertragung über zwei Leistungszweige (17,18), einen ersten hydrodynamischen Leistungszweig (17) und einen zweiten mechanischen Leistungszweig (18) zwischen dem Getriebeeingang (E) und dem Wechselgetriebe (4), wobei die Überbrückungsschaltung (8) zwei Drehzahl-/Drehmomentwandlungseinrichtungen (9,10) umfasst und jede drehzahl-/Drehmomentwandlungseinrichtung (9,10) der Überbrückungsschaltung (8) das mit dieser koppelbare Anschlusselement zum Getriebeeingang (E) mit wenigstens einem der Eingänge (11, 39) des Wechselgetriebes (4) verbindet;

1.6 mit Mitteln (19) zur wahlweisen Unterbrechung oder Gewährleistung der Leistungsübertragung über die einzelnen Leistungszweige (17,18);

1.7 die Mittel (19) zur wahlweisen Unterbrechung oder Gewährleistung der Leistungsübertragung über die einzelnen Leistungszweige (17, 18) umfassen (eine der zweiten Drehzahl-/ Drehmomentwandlungseinrichtung (10) der Überbrückungsschaltung (8) zugeordnete Schalteinrichtung (20) und eine der ersten Drehzahl-/Drehmomentwandlungseinrichtung (9) zugeordnete Schalteinrichtung (20), welche als Freilauf (21) ausgebildet ist.

2. Getriebebaueinheit (1) nach Anspruch 1, **dadurch gekennzeichnet, dass** der Freilauf (21) in der Verbindung des Einganges der ersten Drehzahl-/Drehmomentwandlungseinrichtung (9) mit dem Sekundärrad (7) angeordnet ist.

3. Getriebebaueinheit (1) nach einem der Ansprüche 1 oder 2, **dadurch gekennzeichnet, dass** der Freilauf (21) in der Verbindung des Ausganges der ersten Drehzahl-/Drehmomentwandlungseinrichtung. (9) mit dem Eingang (11, 39) des Wechselgetriebes (5) angeordnet Ist.

4. Getriebebaueinheit (1) nach einem der Ansprüche 1 bis 3, **dadurch gekennzeichnet, dass** dieses eine Rückwärtsfahrstufe (29) aufweist, die im ersten Leistungszweig (17) angeordnet ist und wahlweise schaltbar ist, wobei dem Freilauf Mittel zur Deaktivierung des Freilaufs zugeordnet sind.

5. Getriebebaueinheit (1) nach einem der Ansprüche 1 bis 4, **dadurch gekennzeichnet, dass** eine dem Sekundarrad (7) zugeordnete Bremseinrichtung (28) zur Abstützung und/oder Festsetzung des Sekundärrades (7) an einem ortsfesten oder mit Relativdrehzahl zum Sekundärrad rotierenden Element vorgesehen ist, wobei die Bremseinrichtung an der Verbindung zwischen Sekundärrad und Freilauf an beliebiger Stelle angeordnet Ist.

6. Getriebebauelnheit (1) nach einem der Ansprüche 1 bis 5, **gekennzeichnet durch** die folgenden Merkmale:

6.1 das Wechselgetriebe (4) umfasst wenigstens zwei Eingänge (11, 39), wobei der erste Eingang (11) von einer ersten Vorgelegewelle (12) und der zweite Eingang (39) von der zweiten Vorgelegewelle (41) gebildet wird;

6.2 der erste und der zweite Eingang (11, 39) sind unter Bildung des ersten oder zweiten Leistungszweiges (17, 18) jeweils über die erste oder zweite Drehzahl-/Drehmomentwandlungseinrichtung (9, 10) wenigstens mittelbar mit dem Getriebeeingang (E) verbindbar:

6.3 beide Vorgelegewellen (12, 41) sind parallel zur theoretischen Rotationsachse R des Anfahrelementes (2) angeordnet:

7. Getriebebaueinheit (1) nach Anspruch 6, **dadurch gekennzeichnet, dass** belde Vorgelegewellen (12, 41) mit gleichem Achsabstand ($a_1$, $a_2$) zur Verlängerung der theoretischen Rotationsachse (R) des Anfahrelementes (2) angeordnet sind.

8. Getriebebaueinhelt (1) nach einem der Anspruche 6 oder 7, **dadurch gekennzeichnet, dass** das Wechselgetriebe als Summiergetriebe ausgeführt ist, umfassend zwei Eingänge, die jeweils mit den einzelnen Drehzahl-/Drehmomentwandlungseinrichtungen (9, 10) der Überbrückungsschaltung (8) koppelbar sind, wobei jede Drehzahl-/Drehmomentwandlungseinrichtung (9, 10) der Überbruckungsschaltung (8) einen Eingang und zwei Ausgänge umfasst, die mit den Elngängen des Wechselgetriebes (4) verbindbar sind.

9. Getriebebaueinheit (1) nach einem der Ansprüche 6 bis 8, **dadurch gekennzeichnet, dass** die die Drehzahl-/Drehmomentwandlungseinrichtungen (9, 10) der Überbrückungsschaltung (8), der Rückwärtsfahrstufe (29) und die wenigstens eine Gangstufe charakterisierenden Drehzahl-/Drehmomentwandlungseinrichtungen (13.1 bis 13.6) des Wechselgetriebes (4) bezüglich der theoretischen Rotationsachse (R) des Anfahrelementes (2) symmetrisch angeordnet sind und jede Drehzahl-/Drahmomentwandlungseinrichtung (9, 10) einen Eingang und zwei Ausgänge umfasst, die mit den Eingängen des Wechselgetriebes (4) verbindbar sind.

10. Getriebebaueinheit (1) nach Anspruch 6, **dadurch gekennzeichnet, dass** die Vorgelegewellen (12, 41) mit ungleichem Achsabstand ($a_1$ $a_2$ mit $a_1 \neq a_2$) zur Verlängerung der theoretischen Rotationsachse (R) der Anfahrelementes (2) angeordnet sind;

10.1 Jeder Eingang des Wechselgetriebes (4) ist über wenigstens eine Gangstufe beschreibende Drehzah-/Drehmomentwandlungseinrichtung mit dem Ausgang der Getriebebaueinheit (1) verbindbar.

11. Getriebebaueinheit (1) nach einem der Ansprüche 6 oder 10 **gekennzeichnet durch** folgende Merkmale:

11.1. die einzelne Drehzahl-/Drehmomentwandlungseinrichtung (9, 10) der Überbrückungsschaltung ist mit jeweils nur einem Eingang (11, 39) des Wechselgetriebes (4) verbindbar;

11.2 wenigstens zwei jeweils eine Gangstufe beschreibende Drehzahl-/Drehmomentwandlungseinrichtungen des Wechselgetriebes (4) sind in einer axialen Ebene angeordnet;

11.3 die in einer axialen Ebene angeordneten eine Gangstufe beschreibenden Drehzahl-Drehmomentwandlungseinrichtungen des Wechselgetriebes (4) welsen einen gemeinsamen Ausgang auf, der mit dem Getriebeausgang (A) drehfest koppelbar ist.

12. Getriebebaueinheit (1)nach einem der Ansprüche 1 bis 11, **dadurch gekennzeichnet, dass** das Schaltelement der zweiten Drehzahl-/Drehmomentwandlungseinrichtung (10) und/oder die Schaltelemente des Wechselgetriebes als Kupplungseinrichtungen ausgeführt sind.

13. Getriebebaueinheit (1) nach Anspruch 12, **dadurch gekennzeichnet, dass** die einzelne Kupplungseinrichtung als formschlüssige synchron schaltbare Kupplungen ausgeführt ist.

14. Getriebebaueinhelt (1) nach Anspruch 13, **dadurch gekennzeichnet, dass** die formschlüssige Kupplung als Klauenkupplung ausgeführt ist.

15. Getrisbebaueinhelt (1) nach einem der Ansprüche 1 bis 14, **dadurch gekennzeichnet, dass** der Freilauf und die Kupplungseinrichtung der zweiten Drehzahi-/Drehmomentwandlungseinrichtung (10) koaxial zuelnander angeordnet sind.

16. Getriebebaueinheit (1) nach Anspruch 15, **dadurch gekennzeichnet, dass** der Freilauf und die Kupplungseinrichtung der zweiten Drehzahl-/Drehmomentwandlungseinrichtung (10) koaxial zur Rotationsachse des Anfahrelementes angeordnet sind.

17. Getriebebaueinheit (1) nach einem der Ansprüche 1 bis 14, **dadurch gekennzeichnet, dass** der Frellauf und die Kupplungseinrichtung der zweiten Drehzahi-/Drehmomentwandlungseinrichtung (10) koaxial zum Eingang des Wechselgetriebes angeordnet sind.

18. Getriebebeueinheit (1) nach einem der Ansprüche 1 bis 14, **dadurch gekennzeichnet, dass** der Frellauf und die Kupplungseinrichtung der zweiten Drehzahl-/Drehmomentwandlungseinrichtung (10) exzentrisch zuelnander angeordnet sind.

19. Getriebebaueinheit (1) nach einem der Ansprüche 4 bis 18, **dadurch gekennzeichnet, dass** die einzelne Rückwärtsfahrstufe (29) als Stirnradstufe ausgeführt ist und eine zur ersten Drehzahl-/Drehmomentwandlungseinrichtung (9) eine um n ungleiche Anzahl an Stirnrädern umfasst, wobei n gleich ungerade ist.

20. Getriebebaueinheit (1) nach einem der Ansprüche 1 bis 19, **dadurch gekennzeichnet, dass** eine Lastschaltvorrichtung (32) vorgesehen ist.

21. Getriebebaueinheit (1) nach Anspruch 20, **gekennzeichnet durch** die folgenden Merkmale:

21.1 die Lastschalteinrichtung (32) umfasst eine parallel zur Rotationsachsen angeordnete Lastschaltwelle;

21.2 die Lastschaltwelle ist über eine erste Drehzahl-/ Drehmomentwandlungseinrichtung (9, 18) mit einer der beiden Drehzahl-/Drehmomentwandlungseinrichtungen der Überbrückungsschaltung (8) und über eine zweite Drehzahl-/Drehmomentwandlungseinrichtung mit dem Getriebeausgang (A) verbindbar.

22. Getriebebauelnheit (1) nach einem der Ansprüche 1 bis 21, **dadurch gekennzeichnet, dass** zwischen dem Getriebeeingang (E) und dem Getriebeausgang (A) eine schaltbare Kupplung zur Realisierung eines Direktganges vorgesehen Ist.

23. Getriebebaueinheit (1) nach einem der Ansprüche 1 bis 22, **dadurch gekennzeichnet, dass** die erste Drehzahl-/Drehmomentwandlungseinrichtung (9) mit dem Getriebeeingang (E) wahlweise über ein Schaltelement verbindbar ist.

24. Getriebebaueinheit (9) nach einem der Ansprüche 1 bis 23, **dadurch gekennzeichnet, dass** die Drehzahl-/Drehmomentwandlungseirichtungen (9, 10) der Überbrückungsschaltung (8) und/oder der Rückwärtsfahrstufe (29) und/oder der Gangstufen (13.1-13.5) des Wechselgetriebes (4) und/oder Lastschalteinrichtung (49) In Vorgelegebauweise als Stirnradsätze ausgeführt sind.

25. Getriebebaueinheit (1) nach einem der Ansprüche 1 bis 24, **dadurch gekennzeichnet, dass** die Übersetzung der zweiten Drehzahl-/Drehmomentwandlungseinrichtung (10) der Überbrückungsschaltung (8) **dadurch** charakterisiert ist, dass diese um den Betrag des Schlupfes der hydrodynamischen Komponente (2) bei gewünschter Überbrückung, gegenüber der ersten Drehzahl-/Drehmomentwandlungseinrichtung (9) geändert ist.

## Claims

1. A transmission assembly (1);

1.1 fitted with a transmission input (E) and at least one transmission output (A);

1.2 with a starting element (2) in the form of a controlled and/or regulated hydrodynamic clutch (3), comprising a primary wheel (6) and a secondary wheel (7),which together define a working compartment that can be filled with a working fluid;

1.3 fitted with a bridging device (5) associated with the hydrodynamic clutch (3);

1.4 with a variable speed transmission (4), comprising at least one inlet (11, 39) and one outlet (14), which is torque-proof connected to the outlet (A) of the transmission assembly or that forms the same, comprising at least one speed/torque converter device forming a gear ratio(13.1 to 13.6);

1.5 the bridging device (5) includes a bridging circuit (8) relative for at least selectively transmitting power via two power trains (17,16), a first hydrodynamic power train (17) and a second mechanical power train (16) between the transmission inlet (E) and the variable speed transmission (4), wherein the bridging circuit (8) contains two speed/torque converter devices (9,10) and each speed/torque converter device (9,10) of the bridging circuit (B) connects at least of the inlets (11,39) of the variable speed transmission (4) as a connecting element to the transmission inlet (E) which can be coupled therewith;

1.6 with means (19) for selectively interrupting or ensuring power transmission via the individual power trains (17,18);

1.7 which include means (19) for selectively interrupting or ensuring power transmission via the individual power trains (17,18) including a switching device (20) associated with the second speed/torque converter device (10) and a switching device (20) associated with the first speed/torque converter device (9), which is designed as a free-wheel mechanism (21).

2. A transmission assembly (1) according to claim 1, **characterised in that** the free-wheel mechanism (21) is provided in the connection of the inlet of the first speed/torque converter device (9) with the secondary wheel (7).

3. A transmission assembly (1) according to one of the claims 1 or 2, **characterised in that** the free-wheel mechanism (21) is provided in the connection of the outlet of the first speed/torque converter device (9) with the inlet (11, 39) of the variable speed transmission (5).

4. A transmission assembly (1) according to one of the claims 1 to 3, **characterised in that** said assembly includes a reverse gear (29), which is arranged in the first power train (17) and is selectively switchable, whereas means for deactivating the free-wheel mechanism are associated with the free-wheel mechanism.

5. A transmission assembly (1) according to one of the claims 1 to 4, **characterised in that** a braking device (28) associated with the secondary wheel (7) for supporting and/or fixing the secondary wheel (7) to a fixed element or to an element rotating with a relative rotation speed with respect to the secondary wheel is provided, wherein the braking device is arranged on the connection between secondary wheel and free-wheel mechanism at any position.

6. A transmission assembly (1) according to one of the claims 1 to 5, **characterised by** the following features;

6.1 the variable speed transmission (4) contains at least two inlets (11, 39), whereas

6.2 the first inlet (11) consists of a first intermediate shaft (12) and the second inlet (39) consists of the second intermediate shaft (41); the first and the second inlet (11, 39) can each be connected via the first or second speed/torque converter device (9, 10) at least indirectly to the transmission inlet (E) by forming the first or second power train (17,18);

6.3 both intermediate shafts (12, 41) are arranged parallel to the theoretical rotation axis R of the starting element (2);

7. A transmission assembly (1) according to claim 6, **characterised in that** both intermediate shafts (12,41) are arranged with the same axial distance (a1, a2) for extending the theoretical rotation axis (R) of the starting element (2).

8. A transmission assembly (1) according to one of the claims 6 or 7, **characterised in that** the variable speed transmission is designed as a summing transmission, comprising two inlets, that each can be coupled to the individual speed/torque converter devices (9, 10) of the bridging circuit (8), wherein each speed/torque converter device (9,10) of the bridging circuit (8) contains one inlet and two outlets, which can be connected to the inlets of the variable speed transmission (4).

9. A transmission assembly (1) according to one of the claims 6 to 8, **characterised in that** the speed/torque converter devices (13.1 to 13.6) of the variable speed transmission (4) characterising the speed/torque converter devices (9, 10) of the bridging circuit (8), of the reverse gear (29) and said at least one gear ratio are arranged symmetrically relative to the theoretical rotation axis (R) of the starting element (2)and each speed/torque converter device (9,10) contains one inlet and two outlets, which can be connected to the inlets of the variable speed transmission (4).

10. A transmission assembly (1) according to claim 6, **characterised in that** the intermediate shafts (12,41) are arranged with different axial distance (a1, a2 with a1 ≠ a2) for extending the theoretical rotation axis (R) of the starting element (2);

    10.1. Each inlet of the variable speed transmission (4) can be connected to the outlet of the transmission assembly (1) via at least one speed/torque converter device corresponding to a gear ratio.

11. A transmission assembly (1) according to one of the claims 6 or 10, **characterised by** the following features:

    11.1 any individual speed/torque converter device (9, 10) of the bridging circuit can be connected to only one inlet (11, 39) of the variable speed transmission (4);
    11.2 at least two speed/torque converter devices of the variable speed transmission (4) each corresponding to a gear ratio are arranged in an axial plane;
    11.3 the speed/torque converter devices of the variable speed transmission (4) arranged in an axial plane and corresponding to a gear ratio present a common outlet which can be coupled torque-proof to the transmission output (A).

12. A transmission assembly (1) according to one of the claims 1 to 11, **characterised in that** the switching element of the second speed/torque converter device (10) and/or the switching elements of the variable speed transmission are designed as clutch devices.

13. A transmission assembly (1) according to claim 12, **characterised in that** the individual clutch device consists of positive synchronous engageable clutches.

14. A transmission assembly (1) according to claim 13, **characterised in that** the positive clutch is designed as a claw clutch.

15. A transmission assembly (1) according to one of the claims 1 to 14, **characterised in that** the free-wheel mechanism and the clutch device of the second speed/torque converter device (10) are arranged coaxially relative to one another.

16. A transmission assembly (1) according to claim 15, **characterised in that** the free-wheel mechanism and the clutch device of the second speed/torque converter device (10) are arranged coaxially to the rotation axis of the starting element.

17. A transmission assembly (1) according to one of the claims 1 to 14, **characterised in that** the free-wheel mechanism and the clutch device of the second speed/torque converter device (10) are arranged coaxially relative to the inlet of the variable speed transmission.

18. A transmission assembly (1) according to one of the claims 1 to 14, **characterised in that** the free-wheel mechanism and the clutch device of the second speed/torque converter device (10) are arranged eccentrically relative to one another.

19. A transmission assembly (1) according to one of the claims 4 to 18, **characterised in that** the individual reverse gear (29) is designed as a spur wheel gear and that a gear assigned to the first speed/torque converter device (9) includes a number of spur wheels which is different from n, whereas n is an odd number.

20. A transmission assembly (1) according to one of the claims 1 to 19, **characterised in that** a load switching circuit (32) is provided.

21. A transmission assembly (1) according to claim 20, **characterised by** the following features;

    21.1 the load switching circuit (32) contains a load switch shaft arranged parallel to the rotation axis;
    21.2 the load switch shaft can be connected via a first speed/torque converter device (9,18) to one of both speed/torque converter devices of the bridging circuit (8) and via a second speed/torque converter device to the transmission output (A).

22. A transmission assembly (1) according to one of the claims 1 to 21, **characterised in that** a engageable clutch is provided for achieving a direct gear between the transmission inlet (E) and the transmission outlet (A).

23. A transmission assembly (1) according to one of the claims 1 to 22, **characterised in that** the first speed/torque converter device (9) can be connected to the transmission inlet (E) selectively via a switching element.

**24.** A transmission assembly (1) according to one of the claims 1 to 23, **characterised in that** the speed/torque converter devices (9, 10) of the bridging circuit (8) and/or of the reverse gear (29) and/or of the gear ratios (13.1-13.5) of the variable speed transmission (4) and/or load switching circuit (49) are designed as spur wheel sets in a countershaft transmission arrangement.

**25.** A transmission assembly (1) according to one of the claims 1 to 24, **characterised in that** the transmission ratio of the second speed/torque converter device (10) of the bridging circuit (8) is **characterised in that** said transmission ratio is modified by the amount of the slip of the hydrodynamic component (2) at the desired by-pass with respect to the first speed/torque converter device (9).

**Revendications**

**1.** Ensemble de transmission (1);

1.1 disposant d'une entrée de transmission (E) et d'au moins une sortie de transmission (A);
1.2 d'un élément de démarrage (2) sous forme d' embrayage hydrodynamique (3) pouvant être commandé et/ou régulé,comprenant une roue primaire (6) et une roue secondaire (7), consitutant ensemble un espace de travail pouvant être rempli d'un fluide d'exploitation;
1.3 d'un dispositif (5) de pontage associé à l'embrayage hydrodynamique (3);
1.4 d'une transmission à vitesse variable (4), comprenant au moins une entrée (11, 39) et une sortie (14), qui est solidaire de la sortie (A) de l'ensemble de transmission (1) ou forme ladite sortie, comprenant au moins un dispositif convertisseur de vitesse/couple (13.1 à 13.6) constituant un rapport d'engrenage;
1.5 le dispositif (5) de pontage comprend un circuit de pontage (8) pour au moins assurer de manière sélective une transmission de puissance par le biais de deux branches de puissance (17,16), une première branche de puissance hydrodynamique (17) et une deuxième branche de puissance mécanique (16) entre l'entrée de transmission (E) et la transmission à vitesse variable (4), dans lequel le circuit de pontage (8) contient deux dispositifs convertisseurs de vitesse/couple (9,10) et chaque dispositif convertisseur de vitesse/couple (9,10) du circuit de pontage (B) raccorde au moins l'une des entrées (11,39) de la transmission à vitesse variable (4) à l'entrée de transmission (E) par le biais de cet élément de raccordement pouvant s'accoupler;
1.6 de moyens (19) permettant de manière sélective d'interrompre ou d'assurer la transmission de puissance par le biais des diverses branches de puissance (17,18);
1.7 comprenant les moyens (19) permettant de manière sélective d'interrompre ou d'assurer la transmission de puissance par le biais des diverses branches de puissance (17, 18) comprenant un dispositif de commutation (20) associé au deuxième dispositif convertisseur de vitesse/couple (10) et un dispositif de commutation (20) associé au premier dispositif convertisseur de vitesse/couple (9), lequel dispositif fait office de mécanisme à roue libre (21).

**2.** Ensemble de transmission (1) selon la revendication 1, **caractérisé en ce que** le mécanisme à roue libre (21) est disposé dans la partie connexion d'entrée du premier dispositif convertisseur de vitesse/couple (9) avec la roue secondaire (7).

**3.** Ensemble de transmission (1) selon l'une des revendications 1 ou 2, **caractérisé en ce que** le mécanisme à roue libre (21) est disposé dans la partie connexion de sortie du premier dispositif convertisseur de vitesse/couple (9) avec l'entrée (11, 39) de la transmission à vitesse variable (5).

**4.** Ensemble de transmission (1) selon l'une des revendications 1 à 3, **caractérisé en ce que** ledit ensemble présente une marche arrière (29), qui est prévue dans la première branche de puissance (17) et peut être sollicitée de manière sélective, tandis que le mécanisme à roue libre dispose de moyens de désactivation du mécanisme à roue libre.

**5.** Ensemble de transmission (1) selon l'une des revendications 1 à 4, **caractérisé en ce qu'**un dispositif de freinage (28) associé à la roue secondaire (7) pour soutenir et/ou fixer la roue secondaire est prévu au niveau d'un élément fixé à demeure ou d'un élément rotatif à une vitesse de rotation relative par rapport à la roue secondaire, dans lequel le dispositif de freinage est disposé au niveau de la connexion entre la roue secondaire et le mécanisme à roue libre en n'importe quel point.

**6.** Ensemble de transmission (1) selon l'une des revendications 1 à 5, présentant les caractéristiques suivantes;

6.1 la transmission à vitesse variable (4) comprend au moins deux entrées (11, 39), tandis que
6.2 la première entrée (11) est constituée d'un premier arbre intermédiaire (12) et la seconde entrée (39) est constituée du second arbre intermédiaire (41); la première entrée et la seconde entrée (11, 39) peuvent être raccordées au moins indirectement à l'entrée de transmission (E) en formant la première ou la seconde branche de puissance (17,18) chacune par le biais du premier ou du second dispositif convertisseur de vitesse/couple (9, 10);

6.3 les deux arbres intermédiaires (12, 41) sont disposés parallèles à l'axe de rotation théorique R de l'élément de démarrage (2);

**7.** Ensemble de transmission (1) selon la revendication 6, **caractérisé en ce que** les deux arbres intermédiaires (12,41) sont disposés à la même distance axiale (a1, a2) pour rallonger l'axe de rotation théorique (R) de l'élément de démarrage (2).

**8.** Ensemble de transmission (1) selon l'une des revendications 6 ou 7, **caractérisé en ce que** la transmission à vitesse variable est conçue comme transmission sommatrice, comprenant deux entrées, chacune pouvent être accouplée avec les divers dispositifs convertisseurs de vitesse/couple (9, 10) du circuit de pontage (8), dans lequel chaque dispositif convertisseur de vitesse/couple (9,10) du circuit de pontage (8) comprend une entrée et deux sorties, qui peuvent être raccordées aux entrées de la transmission à vitesse variable (4).

**9.** Ensemble de transmission (1) selon l'une des revendications 6 à 8, **caractérisé en ce que** les dispositifs convertisseurs de vitesse/couple (13.1 à 13.6) de la transmission à vitesse variable (4) caractérisant les dispositifs convertisseurs de vitesse/couple (9, 10) du circuit de pontage (8), de la marche arrière (29) et ledit au moins un rapport d'engrenage sont disposés de manière symétrique par rapport à l'axe de rotation théorique (R) de l'élément de démarrage (2) et chaque dispositif convertisseur de vitesse/couple (9,10) comprend une entrée et deux sorties, qui peuvent être raccordées aux entrées de la transmission à vitesse variable (4).

**10.** Ensemble de transmission (1) selon la revendication 6, **caractérisé en ce que** les arbres intermédiaires (12,41) sont disposés à une distance axiale différente (a1, a2 avec a1 ≠ a2) pour rallonger l'axe de rotation théorique (R) de l'élément de démarrage (2);

10.1. Chaque entrée de la transmission à vitesse variable (4) peut être raccordée à la sortie de l'ensemble de transmission (1) par le biais d'au moins un dispositif convertisseur de vitesse/couple définissant un rapport d'engrenage.

**11.** Ensemble de transmission (1) selon l'une des revendications 6 ou 10, présentant les caractéristiques suivantes:

11.1 le dispositif convertisseur de vitesse/couple individuel (9, 10) du circuit de pontage peut chacun être raccordé avec une seule entrée (11, 39) de la transmission à vitesse variable (4);

11.2 au moins deux dispositifs convertisseurs de vitesse/couple de la transmission à vitesse variable (4) définissant chacun un rapport d'engrenage sont disposés dans un plan axial;

11.3 les dispositifs convertisseurs de vitesse/ couple de la transmission à vitesse variable (4) définissant rapport d'engrenage et disposés dans un plan axial présentent une sortie commune, qui peut être accouplée à la sortie de transmission (A) avec blocage en rotation.

**12.** Ensemble de transmission (1) selon l'une des revendications 1 à 11, **caractérisé en ce que** l'élément de commutation du second dispositif convertisseur de vitesse/couple (10) et/ou les élément de commutation de la transmission à vitesse variable sont conçus comme dispositifs d'embrayage.

**13.** Ensemble de transmission (1) selon la revendication 12, **caractérisé en ce que** le dispositif d'embrayage individuel se compose d'embrayages commutables synchrones avec engagement positif.

**14.** Ensemble de transmission (1) selon la revendication 13, **caractérisé en ce que** l'embrayage avec engagement positif se compose d'un embrayage à griffes.

**15.** Ensemble de transmission (1) selon l'une des revendications 1 à 14, **caractérisé en ce que** le mécanisme à roue libre et le dispositif d'embrayage du second dispositif convertisseur de vitesse/couple (10) sont disposés coaxialement l'un par rapport à l'autre.

**16.** Ensemble de transmission (1) selon la revendication 15, **caractérisé en ce que** le mécanisme à roue libre et le dispositif d'embrayage du second dispositif convertisseur de vitesse/couple (10) sont disposés coaxialement par rapport à l'axe de rotation de l'élément de démarrage.

**17.** Ensemble de transmission (1) selon l'une des revendications 1 à 14, **caractérisé en ce que** le mécanisme à roue libre et le dispositif d'embrayage du second dispositif convertisseur de vitesse/couple (10) sont disposés coaxialement par rapport à l'entrée de la transmission à vitesse variable.

**18.** Ensemble de transmission (1) selon l'une des revendications 1 à 14, **caractérisé en ce que** le mécanisme à roue libre et le dispositif d'embrayage du second dispositif convertisseur de vitesse/couple (10) sont disposés de manière excentrique l'un par rapport à l'autre.

**19.** Ensemble de transmission (1) selon l'une des revendications 4 à 18, **caractérisé en ce que** la marche arrière individuelle (29) est conçue comme pré-étage et un rapport de transmission comprend pour le premier dispositif convertisseur de vitesse/couple (9) un nombre de roues dentées cylindriques différent de n, n étant un nombre impair.

**20.** Ensemble de transmission (1) selon l'une des revendications 1 à 19, **caractérisé en ce qu'** un dispositif de commutation de charge (32) est prévu.

**21.** Ensemble de transmission (1) selon la revendication 20, présentant les caractéristiques suivantes:

> 21.1 le dispositif de commutation de charge (32) comprend un arbre à coupure de charge disposé parallèle à l'axe de rotation;
> 21.2 l'arbre à coupure de charge peut être raccordé à l'un des deux dispositifs convertisseurs de vitesse/couple du circuit de pontage (8) par l'intermédiaire d'un premier dispositif convertisseur de vitesse/couple (9,18) et à la sortie de transmission (A) par l'intermédiaire d'un second dispositif convertisseur de vitesse/couple.

**22.** Ensemble de transmission (1) selon l'une des revendications 1 à 21, **caractérisé en ce qu'** un embrayage commutable est prévu entre l'entrée de transmission (E) et la sortie de transmission (A) permettant la réalisation d'une prise directe.

**23.** Ensemble de transmission (1) selon l'une des revendications 1 à 22, **caractérisé en ce que** le premier dispositif convertisseur de vitesse/couple (9) peut être raccordé à l'entrée de transmission (E) de manière sélective par l'intermédiaire d'un élément de commutation.

**24.** Ensemble de transmission (1) selon l'une des revendications 1 à 23, **caractérisé en ce que** les dispositifs convertisseurs de vitesse/couple (9, 10) du circuit de pontage (8) et/ou de la marche arrière (29) et/ou des rapports d'engrenage (13.1-13.5) de la transmission à vitesse variable (4) et/ou du dispositif de commutation de charge (49) sont conçus comme ensembles de roues dentées cylindriques dans une construction de transmission intermédiaire.

**25.** Ensemble de transmission (1) selon l'une des revendications 1 à 24, **caractérisé en ce que** le rapport de transmission du second dispositif convertisseur de vitesse/couple (10) du circuit de pontage (8) se **caractérise par le fait que** ledit rapport de transmission est modifié en fonction du patinage du composant hydrodynamique (2) dans le cas d'un pontage voulu par rapport au premier dispositif convertisseur de vitesse/couple (9)

Fig.1

Fig.2

Fig.3

EP 1 819 947 B1

Fig.4

Fig.5

Fig.6

Fig.7

# EP 1 819 947 B1

## IN DER BESCHREIBUNG AUFGEFÜHRTE DOKUMENTE

**In der Beschreibung aufgeführte Patentdokumente**

- DE 10045337 A1
- FR 2719355
- DE 949990
- DE 972489
- US 3442155 A
- DE 960520
- DE 102004008678 A1